# EUROPEAN PATENT APPLICATION

(11) **EP 4 734 444 A1**
(43) Date of publication of application: **29.04.2026**
(21) Application number: 23952660.1
(22) Date of filing: 21.09.2023
(51) Int. Cl.: H04L 9/40, H04W 12/06, H04L 9/00, H04L 9/32

(54) **AUTHENTICATION METHODS AND DEVICES**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); LIU, Xuefeng, Dongguan, Guangdong 523860 (CN); GONG, Dan, Dongguan, Guangdong 523860 (CN); SHI, Cong, Dongguan, Guangdong 523860 (CN)
(74) Representative: Mewburn Ellis LLP
(86) International application number: PCT/CN2023/120497
(87) International publication number: WO 2025/060004

(57) **Abstract**

The present application relates to authentication methods, devices, a computer-readable storage medium, a computer program product and a computer program. A method comprises: obtaining identity information of a plurality of target devices; and sending a first message to a second device, wherein the first message carries the identity information for authenticating the plurality of target devices.

## Description

### TECHNICAL FIELD

The present disclosure relates to the field of communications, and in particular, to authentication methods, devices, a computer-readable storage medium, a computer program product and a computer program.

### BACKGROUND

With the development of technologies, there is a communication need between an Internet of Things (IoT) device or zero-power device and a network-side device or another IoT device (or zero-power device). For the IoT device or zero-power device to communicate with the network-side device or the another IoT device (or zero-power device), authentication processing need be completed first. However, the network-side device or the another IoT device (or zero-power device) may need to initiate communication with a plurality of IoT devices (or a plurality of zero-power devices) simultaneously. In this scenario, the network-side device or the another IoT device (or zero-power device) need to perform authentication interactions with a large number of zero-power devices within a short period of time. How to ensure authentication processing efficiency in this case becomes a problem that needs to be solved.

### SUMMARY

The embodiments of the present disclosure provide authentication methods, devices, a computer-readable storage medium, a computer program product and a computer program.

The embodiments of the present disclosure provide an authentication method performed by a first device, including:
obtaining identity information of a plurality of target devices; and
transmitting a first message to a second device, where the first message carries the identity information for authenticating the plurality of target devices.

The embodiments of the present disclosure provide an authentication method performed by a second device, including:
receiving a first message from a first device, where the first message carries identity information for authenticating a plurality of target devices.

The embodiments of the present disclosure provide a first device, including:
a first processing unit configured to obtain identity information of a plurality of target devices;
a first communication unit configured to transmit a first message to a second device, where the first message carries the identity information for authenticating the plurality of target devices.

The embodiments of the present disclosure provide a second device, including:
a second communication unit configured to receive a first message from a first device, where the first message carries identity information for authenticating a plurality of target devices.

The embodiments of the present disclosure provide a first device, including a transceiver, a processor and a memory. The memory is configured to store a computer program, and the processor is configured to call the computer program stored in the memory and run the computer program to enable the first device to perform the method described above.

The embodiments of the present disclosure provide a second device, including a transceiver, a processor and a memory. The memory is configured to store a computer program, and the processor is configured to call the computer program stored in the memory and run the computer program to enable the second device to perform the method described above.

The embodiments of the present disclosure provide a chip for implementing the above methods.

Specifically, the chip includes a processor configured to call a computer program from a memory and run the computer program to enable a device equipped with the chip to perform the methods described above.

The embodiments of the present disclosure provide a computer-readable storage medium for storing a computer program. The computer program, when run on a device, enables the device to perform the above-mentioned methods.

The embodiments of the present disclosure provide a computer program product, including computer program instructions. The computer program instructions enable a computer to perform the above-mentioned methods.

The embodiments of the present disclosure provide a computer program, and the computer program, when run on a computer, enables the computer to perform the above-mentioned methods.

By adopting the authentication methods provided in the embodiments, the first device may, acting as a proxy, obtain the identity information related to the plurality of target devices, and then transmit the identity information related to the plurality of target devices to the second device, so that the second device may authenticate the plurality of target devices based on the identity information related to the plurality of target devices. In this way, the plurality of target devices may be authenticated at once, thereby improving authentication efficiency. Moreover, since there is no need to obtain contents stored in the target device during an entire authentication process, storage space of the target device may be saved and storage costs of the target device may be reduced.

### BRIEF DESCRIPTION OF THE DRAWINGS

FIG. 1 is a schematic diagram of an application scenario in accordance with the embodiments of the present disclosure.
FIG. 2 is a schematic flowchart of an authentication method in accordance with the embodiments of the present disclosure.
FIG. 3 is a schematic flowchart of another authentication method in accordance with the embodiments of the present disclosure.
FIGS. 4a and 4b are schematic diagrams of two scenarios of a Merkle tree structure in accordance with the embodiments of the present disclosure.
FIG. 5 is a schematic flowchart of an authentication method in accordance with the embodiments of the present disclosure.
FIG. 6 is a schematic flowchart of another authentication method in accordance with the embodiments of the present disclosure.
FIG. 7 is a schematic flowchart of another authentication method in accordance with the embodiments of the present disclosure.
FIG. 8 is a schematic diagram of a scenario of a two-layer identity architecture of a blockchain in accordance with the embodiments of the present disclosure.
FIG. 9 is a schematic block diagram of a first device in accordance with the embodiments of the present disclosure.
FIG. 10 is a schematic block diagram of a second device in accordance with the embodiments of the present disclosure.
FIG. 11 is a schematic block diagram of a communication device in accordance with the embodiments of the present disclosure.
FIG. 12 is a schematic block diagram of a chip in accordance with the embodiments of the present disclosure.
FIG. 13 is a schematic block diagram of a communication system in accordance with the embodiments of the present disclosure.

### DETAILED DESCRIPTION

Technical solutions in the embodiments of the present disclosure may be applied to various communication systems, such as a long term evolution (LTE) system, an advanced long term evolution (LTE-A) system, a new radio (NR) system, an evolution system of the NR system, a wireless local area networks (WLAN) system, a wireless fidelity (Wi-Fi) system, or other communication systems.

The embodiments of the present disclosure describe various embodiments in conjunction with network devices and terminals. The terminal may be mobile or fixed, and the terminal may also be referred to as a mobile station, a user unit, or the like. The terminal may be a station in the WLAN, or a smart terminal, a wireless modem, a laptop, a tablet, or other terminals. In the embodiments of the present disclosure, the terminal may be a virtual reality (VR) terminal/an augmented reality (AR) terminal, an industrial control terminal, an unmanned terminal, a remote medical terminal, a smart grid terminal, a transportation safety terminal, a smart city terminal, or a wireless terminal in a smart home, or the like. As an example but not a limitation, in the embodiments of the present disclosure, the terminal may also be a wearable device.

In the embodiments of the present disclosure, the network device may be a device for communicating with the terminal. The network device may be an access point in the WLAN, an evolved base station in the LTE, a relay station, an in-vehicle device, a wearable device, a network device (gNB) in the NR network, a network device in the future evolved PLMN network, a network device in a non-terrestrial network (NTN), or the like. As an example but not a limitation, in the embodiments of the present disclosure, the network device may have mobility characteristics. For example, the network device may be a mobile device.

It should be understood that the terms "system" and "network" are often used interchangeably herein. The term "and/or" herein is only an association relationship for describing associated objects, indicating that there may be three relationships. For example, "A and/or B" may represent three cases: A alone, both A and B, and B alone. In addition, a character "/" herein generally indicates that the associated objects before and after this character are in an "or" relationship. It should be understood that the term "indication" mentioned in the embodiments of the present disclosure may be a direct indication, an indirect indication, or an indication of an associated relationship. For example, A indicating B may mean that A directly indicates B (e.g., B may be obtained through A); alternatively, A indicating B may mean that A indirectly indicates B (e.g., A indicates C, and B may be obtained through C); alternatively, A indicating B may mean that there is an association relationship between A and B. In the description of the embodiments of the present disclosure, the term "correspondence" may mean that there is a direct or indirect correspondence between the two, or may mean that there is an association relationship between the two, or may mean a relationship of indicating and being indicated, or a relationship of configuring and being configured, or the like.

For facilitating understanding of the technical solutions in the embodiments of the present disclosure, the relevant technologies of the embodiments of the present disclosure are described below. The following relevant technologies, as optional solutions, may be arbitrarily combined with the technical solutions in the embodiments of the present disclosure, and those combined solutions all fall within the protection scope of the embodiments of the present disclosure.

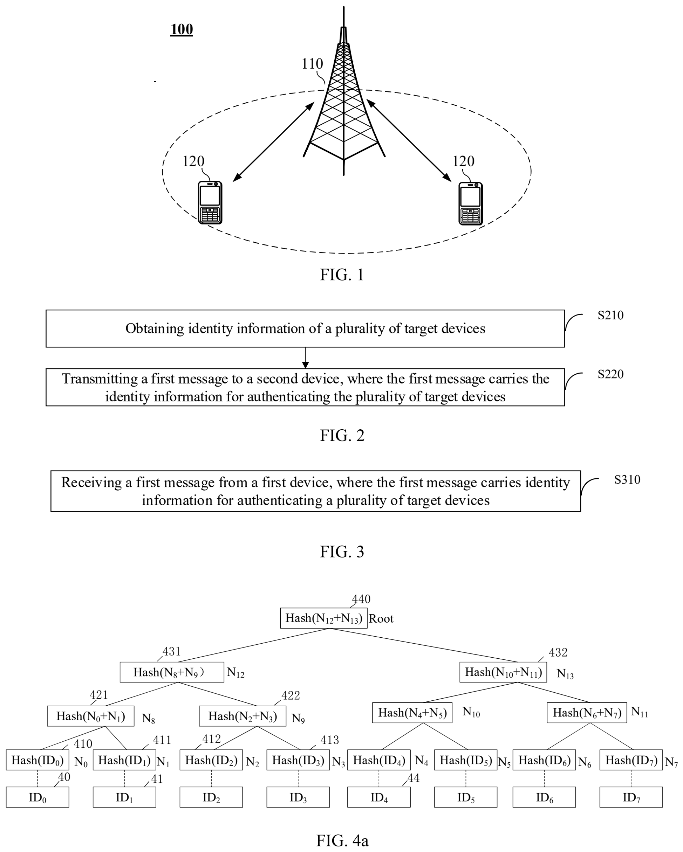

FIG. 1 exemplarily illustrates a communication system 100. The communication system includes a network device 110 and two terminals 120. In a possible implementation, the communication system 100 may include a plurality of network devices 110, and there may be another number of terminals 120 within a coverage area of each network device 100, which is not limited in the embodiments of the present disclosure. In a possible implementation, the communication system 100 may also include other network entities such as a mobility management entity or an access and mobility management function, which are not limited in the embodiments of the present disclosure. Here, the network device may include an access network device and a core network device. That is, the communication system may further include a plurality of core networks for communicating with the access network device. The access network device may be a base station in the LTE, LTE-A or NR system. Taking the communication system shown in FIG. 1 as an example, the communication devices may include network devices with communication functions and terminals with communication functions. The communication device may further include other devices (e.g., a network controller, a mobility management entity, and other network entities) in the communication system, and limitations are not made in the embodiments of the present disclosure.

FIG. 2 is a schematic flowchart of an authentication method performed by a first device in accordance with the embodiments of the present disclosure. The method includes at least part of the following contents.

In S210, identity information of a plurality of target devices is obtained.

In S220, a first message is transmitted to a second device, where the first message carries the identity information for authenticating the plurality of target devices.

FIG. 3 is a schematic flowchart of an authentication method performed by a second device in accordance with the embodiments of the present disclosure. The method includes at least part of the following contents.

In S310, a first message from a first device is received, where the first message carries identity information for authenticating a plurality of target devices.

In the present disclosure, the first device may be alternatively referred to as a proxy device, a proxy node or the like, and various possible names of the first device are not exhaustively listed and limited here. The first device is one of a terminal and an access network device. The access network device may be any of a base station, a next generation node B (gNodeB, gNB), an evolutional node B (eNodeB, eNB), an integrated access backhaul (IAB) node and the like.

Each target device in the plurality of target devices has one of the following types: a zero-power device and an Internet of Things device. The number of the plurality of target devices is not limited in the embodiments.

In some embodiments, any target device may be any of an ambient power-enabled IoT (AIoT) device, an active zero-power device, a passive zero-power device, a semi-passive zero-power device and the like. In some embodiments, any target device may also be a terminal with a relatively low computing capability. In some possible embodiments, any target device may be referred to as a tag. All possible names or device types of the target device are not exhaustively listed here.

In some embodiments, the first device is a terminal. In such embodiments, the first device and any target device may be communicated by transmitting a sidelink message. In some embodiments, the first device may be an access network device. In such embodiments, the first device and any target device may be communicated by transmitting an access stratum (AS) message.

The identifiers of the plurality of target devices may specifically refer to an identifier of each target device in the plurality of target devices. The identifier may be represented as an ID, and the identifier may include but is not limited to at least one of a factory identifier, a factory unique identifier, an identifier issued by an operator, an identifier issued by a service provider, a subscription permanent identifier (SUPI), a subscription concealed identifier (SUCI), a permanent equipment identifier (PEI), a 5G globally unique temporary identifier (5G-GUTI), an internal-group identifier (IGI), a generic public subscription identifier (GPSI), a network identifier or the like. Here, the network identifier may include at least one of an internet protocol (IP) address or a media access control (MAC) address.

In a case where the type of the second device varies, there may be a varying related processing. Therefore, the authentication method provided in the embodiments of the present disclosure will be described below in conjunction with different types of second devices.

In some possible implementations, the second device may be an authentication function entity. The authentication function entity may be deployed in at least one of: an application function (AF), an access and mobility management function (AMF), a session management function (SMF), an authentication server function (AUSF), a unified data management (UDM) function, a unified data repository (UDR), a home subscriber system (HSS), an authentication credential repository and processing function (ARPF), a bootstrapping server function (BSF), a security anchor function (SEAF), a core network dedicated network element, an access network device or a network edge node (edge configuration server). Here, in a case where the second device is an authentication function entity, if the authentication function entity is specifically deployed in an access network device, the access network device is a different access network device from an access network device which the first device mentioned above is. For example, the first device may be a first access network device, and the second device may be a second access network device.

The authentication function entity may refer to a network element with an authentication function. The authentication function may include at least an authentication function and/or group authorization function of an AIOT group. In some possible examples, A-NF may be used to represent the authentication function (Network Function, NF) and/or group authentication function of the A-IoT group. In other possible examples, the authentication function may also include at least one of: an authentication function and/or group authorization function of a zero-power group, an authentication function and/or group authorization function of an IoT device group, or the like.

For example, the authentication function entity may be obtained by adding an authentication function on a basic of the AF of the application server.

For example, the authentication function entity may be a newly added core network dedicated network element, and the core network dedicated network element has or has set or configured the authentication function. In the example, the core network dedicated network element may be called an AIOT authentication function entity, a zero-power function dedicated authentication function entity, a zero-power dedicated network element, a zero-power device dedicated network element, or the like. In other words, the core network dedicated network element may refer to a network element that has at least zero-power related functions (such as having the AIOT authentication function), or a core network element that may at least serve the AIOT (or serve the zero-power device). It should be understood that the core network dedicated network element may be set separately, or may be an existing core network element with added the zero-power authentication related functions (e.g., with the AIOT or tag authentication function). The embodiments do not exhaustively list all possible situations.

For example, the authentication function entity may be an existing core network element, and the core network element has added, has, or has newly configured the authentication function. For example, the core network element may add the authentication function on a basis of at least one of following functions: the AMF, the SMF, the AUSF, the UDM, the UDR, the HSS, the ARPF, the BSF, the SEAF or the like.

In some embodiments, the second device (i.e., the authentication function entity) is a device that initiates authentication. The second device may transmit a third message to the first device when it needs to communicate with a plurality of target devices.

In an embodiment, the third message may carry at least the identifiers of the plurality of target devices. Furthermore, the third message may, by carrying the identifier of each target device in the plurality of target devices, implicitly indicate that the second device needs to authenticate the plurality of target devices, or implicitly indicate that the second device needs to authenticate the plurality of target devices and communicate with the plurality of target devices. Alternatively, the third message may also carry explicit indication information, and the explicit indication information may be used to indicate any of the following that: the second device needs to authenticate the plurality of target devices, or the second device needs to authenticate the plurality of target devices and communicate with the plurality of target devices.

It should be understood that before the second device transmits the third message, the second device may determine at least part of all the devices in a group as the plurality of target devices, and then transmit the third message. Here, each of all the devices in a group may have the same type, for example, may be a zero-power device or an IoT device. A method by which the second device determines all the devices included in a group, or a method by which the second device selects the plurality of target devices from a group is not limited in the embodiment.

After receiving the third message transmitted by the second device, the first device obtains identity information of the plurality of target devices.

In some possible embodiments, obtaining the identity information of the plurality of target devices may be that the first device itself obtains the identity information of the plurality of target devices.

The identity information includes the identifier of each target device in the plurality of target devices and one or more parameter values corresponding to each target device. The one or more parameter values corresponding to each target device are determined based on group information. In the embodiments, for any device (i.e., a zero-power device) without a powerful computing capability, the first device with the computing capability may be found to act as a proxy device to receive various services in the Internet of Things on behalf of the zero-power device. The first device is a common device with the computing capability, and the first device may be a device under a first service node (e.g., the service node may also be called a key generation center (KGC)) and belongs to the same trust domain as the plurality of devices for which the first device performs proxy.

The first message further carries a group parameter, and the group parameter is calculated based on the identifiers of the plurality of target devices. Specifically, the group parameter may be calculated based on the identifier of each target device in the plurality of target devices.

Furthermore, the group parameter is calculated based on identifiers of a plurality of devices, and the plurality of devices include the plurality of target devices. Specifically, the group parameter may be calculated based on an identifier of each device in the plurality of devices.

That is, the first message transmitted by the first device may carry the identity information of the plurality of target devices and the group parameter. The identity information of the plurality of target devices may be abbreviated as identity information in the following text. Unless otherwise specified, the identity information in the following text has the same concept as that of the identity information of the plurality of target devices.

In the embodiments, the processing of the first device obtaining the identity information of the plurality of target devices may include: generating the identity information of the plurality of target devices based on the identifier of each target device in the plurality of target devices. Furthermore, the processing of the first device may also include: the first device obtaining a group parameter corresponding to the group to which the plurality of target devices belong.

In an embodiment, the group information is pre-stored in the first device. The group information includes: the identifier of each device in the group and the group parameter, where the group parameter is calculated based on the identifier of each device. The group information further includes a parameter value used for verifying each device. Specifically, the group information is stored based on a Merkle tree structure, that is, the first device locally stores a Merkle tree, each leaf node of the tree corresponds to an ID of each device in the group, and a root node Root of the tree corresponds to a hash value (a group parameter) of identities of all the devices for which the first device performs proxy. Furthermore, the Merkle tree includes: a root node, a plurality of leaf nodes and a plurality of intermediate nodes. The plurality of leaf nodes are used to store the identifiers of the plurality of devices. Each intermediate node in the plurality of intermediate nodes is used to store a parameter value of a content of a corresponding child node. The root node is used to store the group parameter. The plurality of devices belong to the same group. The plurality of devices include a plurality of target devices. The plurality of devices and the first device belong to the first service node.

The aforementioned plurality of devices and the first device belong to the first service node, that is, the first device and the plurality of devices belong to the same trust domain.

The aforementioned plurality of devices include the plurality of target devices, that is, the plurality of target devices are at least part of all the devices in the same group. The number of the plurality of devices is not limited in the embodiments. As long as the number of the plurality of target devices is less than or equal to the number of the plurality of devices, and the number of the plurality of target devices is greater than or equal to 2, the number of the plurality of target devices is within the protection scope of the embodiments.

The plurality of leaf nodes are used to store the identifiers of the plurality of devices, which may refer to a fact that different leaf nodes in the plurality of leaf nodes are used to store identifiers of different devices.

Each intermediate node in the plurality of intermediate nodes corresponds to one or more child nodes, and different intermediate nodes correspond to different child nodes. One or more child nodes corresponding to any intermediate node refer to one or more child nodes at the next level of the intermediate node. Accordingly, the intermediate node is the parent node of each child node at the next level corresponding to the intermediate node. Furthermore, the next-level child node of any intermediate node may be a next-level leaf node of the intermediate node or a next-level intermediate node of the intermediate node.

The parameter value may be a hash value. In other words, any intermediate node is used to store the hash value of the content of the corresponding child node.

Optionally, taking an example where any intermediate node is an intermediate node i, the intermediate node i may correspond to a leaf node i, where i is an integer greater than or equal to 1. In this case, a content of the leaf node i is an identifier of a device i. Accordingly, a parameter value of a content of a child node corresponding to the intermediate node i may be obtained by performing hash calculation on the identifier of the device i stored in the leaf node i corresponding to the intermediate node i. Specifically, a method for calculating the parameter value of the content of the child node corresponding to the intermediate node i may include: obtaining the identifier of the device i stored in the leaf node i corresponding to the intermediate node i; performing the hash calculation on the identifier of the device i to obtain an ith hash value; and using the ith hash value as the parameter value of the content of the leaf node i corresponding to the intermediate node i. Here, the specific method of the hash calculation is not limited in the embodiments, where i is an integer greater than or equal to 0, or i is an integer greater than or equal to 1.

Optionally, taking an example where any intermediate node is an intermediate node j, the intermediate node j may correspond to a plurality of child nodes, and each child node in the plurality of child nodes is not a leaf node, where j is an integer greater than or equal to 1. In this case, a content of any child node is a parameter value (i.e., a hash value) stored in the child node. Accordingly, parameter values of contents of the child nodes corresponding to the intermediate node j may be obtained by summing parameter values stored in all child nodes corresponding to the intermediate node j and then performing hash calculation. Specifically, a method for calculating the parameter values of the contents of the child nodes corresponding to the intermediate node j may include: obtaining a parameter value stored in each child node in the plurality of child nodes corresponding to the intermediate node j; performing summing on the parameter values stored in all the child nodes to obtain a jth first value; performing hash calculation on the jth first value to obtain a jth hash value; and using the jth hash value as the parameter values of the contents of the plurality of child nodes corresponding to the intermediate node j, where j is an integer greater than or equal to 0, or j is an integer greater than or equal to 1.

The root node may be a node in the Merkle tree that does not have a previous-level parent node. The root node may correspond to a plurality of child nodes (i.e., the plurality of child nodes at the next level of the root node), and each child node in the plurality of child nodes is not a leaf node. In this case, a content of any child node corresponding to the root node is a parameter value (i.e., a hash value) stored in the child node. The group parameter stored in the root node by summing the parameter values stored in all the child nodes corresponding to the root node and then performing hash calculation. Here, the group parameter may refer to a parameter value of a group to which the plurality of target devices belong. The group to which the plurality of target devices belong may include a plurality of devices, that is, the group parameter may be related to the identifiers of all the devices in the group to which the plurality of target devices belong.

Specifically, a method for calculating the group parameter stored in the root node may include: obtaining the parameter value stored in each child node in the plurality of child nodes corresponding to the root node; performing summing on the parameter values stored in all the child nodes to obtain a second value; performing hash calculation on the second value to obtain a hash value; and using the hash value as the group parameter corresponding to the root node.

In a possible example, the Merkle tree structure is a binary tree structure. Therefore, any intermediate node may correspond to one or two child nodes. Taking FIG. 4a as an example, 8 leaf nodes, corresponding to all 8 devices in a group, are contained in FIG. 4a, and the 8 leaf nodes are used to store IDs of all the devices, respectively. For example, a leaf node 41 stores an ID₁ of a device 1, and the other leaf nodes are not repeated. In FIG. 4a, a next-level child node of an intermediate node 411 is the leaf node 41, and a content stored in the leaf node 41 is ID₁. Accordingly, the intermediate node 411 is used to store a hash value Hash(ID₁) of the ID₁ of the leaf node 41. For example, the hash value stored in the intermediate node 411 may be represented as N₁. A next-level child node of an intermediate node 422 is not a leaf node. There are two child nodes at the next level of the intermediate node 422, namely a child node 412 and a child node 413. The intermediate node 422 is used to store a hash value Hash(N₂+N₃) obtained by summing a hash value (N₂) of the child node 412 and a hash value (N₃) of the child node 413. For example, the hash value stored in the intermediate node 422 may be represented as N₉. The next level of the root node 440 corresponds to two child nodes, namely a child node 431 and a child node 432. The root node 440 is used to store the group parameter (i.e., the Root shown in FIG. 4a). The group parameter is equal to a hash value Hash(N₁₂+N₁₃) obtained by summing a hash value (N₅₃) of the child node 431 and a hash value (N₁₃) of the child node 432. The above description is only an exemplary description of some nodes in FIG. 4a. In actual processing, a calculation method of a content stored in each node at each level in the Merkle tree is similar to that of the example nodes above, and details are not provided one by one.

In an embodiment, the group parameter may be calculated based on the parameter value stored in each child node corresponding to the root node and an identifier of the first device.

For example, a method for calculating the group parameter may be as follows: obtaining a parameter value stored in each child node in the plurality of child nodes corresponding to the root node; performing summing on the parameter values stored in all the child nodes to obtain a second value; performing hash calculation on the second value to obtain a first hash value; performing hash calculation on the identifier of the first device to obtain a second hash value; and performing summing on the first hash value and the second hash value to obtain the group parameter corresponding to the root node.

For example, a method for calculating the group parameter may be as follows: obtaining a parameter value stored in each child node in the plurality of child nodes corresponding to the root node; performing summing on the parameter values stored in all the child nodes and the identifier of the first device to obtain a second value; performing hash calculation on the second value to obtain a first hash value; and using the first hash value as the group parameter corresponding to the root node.

In the embodiment, except for the group parameter of the root node which is different from that in the previous embodiment, the remaining descriptions regarding the leaf nodes and the intermediate nodes are the same as those in the previous embodiment, and details are not repeated.

In an embodiment, the group information is stored based on a Merkle tree structure. The group information includes: a root node, a plurality of leaf nodes and a plurality of intermediate nodes. The plurality of leaf nodes are used to store identifiers of the plurality of devices and an identifier of the first device. Each intermediate node in the plurality of intermediate nodes is used to store a parameter value of a content of the corresponding child node. The root node is used to store the group parameter. The plurality of devices belong to the same group. The plurality of devices include a plurality of target devices. The plurality of devices and the first device belong to a first service node.

In the embodiment, the identifier of the first device is added to the Merkle tree and stored as a leaf node. A method for calculating any intermediate node in the embodiment is the same as that in the previous embodiment, and is not repeated. The group parameter of the root node is still obtained by summing the parameter values stored in all the child node corresponding to the root node and then performing hash calculation, and details are not repeated.

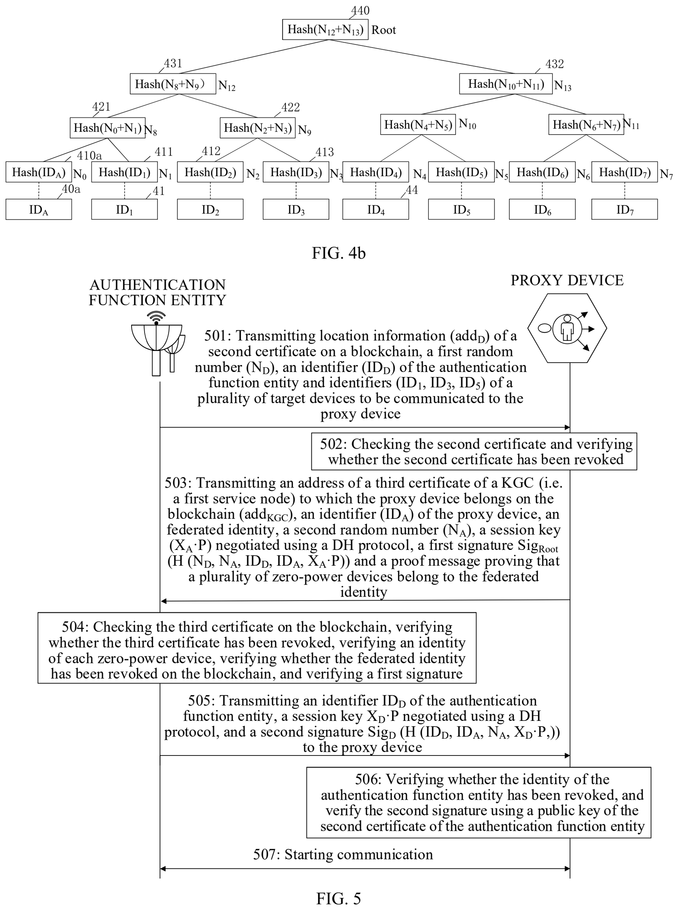

Taking FIG. 4b as an example, 8 leaf nodes are contained in FIG. 4b. Here, 1 leaf node corresponds to an ID of the first device, the remaining 7 leaf nodes correspond to all 7 devices in a group, and the 7 leaf nodes are respectively used to store IDs of all the devices in the group. For example, a leaf node 40a stores an ID_{A} of the first device, and a leaf node 41 stores an ID₁ of a device 1. Except for the leaf node 40a which is different from that in FIG. 4a, the remaining leaf nodes are the same as those in FIG. 4a, and details are not repeated. In FIG. 4b, a next-level child node of an intermediate node 410a is the leaf node 40a. The intermediate node 410a is used to store a hash value Hash(ID_{A}) of the ID_{A} of the leaf node 40a. For example, a hash value stored in the intermediate node 410a may be represented as N₀. The relevant descriptions of the other intermediate nodes and the root node 440 are the same as those in FIG. 4a, and details are not repeated.

It should be noted that the above group parameter may be calculated by the first device. The processing of the first device initially calculating the group parameter (or updating of the group parameter at any time) is similar to the above processing and details are not repeated. After the first device initially calculates the group parameter (or updates the group parameter at any time), in addition to store the group information locally, the following processes may also be performed: the first device storing the group parameter on the blockchain (i.e., the first device uploading and storing the group parameter on the blockchain); alternatively, the first device transmitting the group parameter to the first service node to which the first device belongs, and the first service node storing the group parameter on the blockchain (i.e., the first device transmitting the group parameter to the first service node, and the first service node submitting and storing the group parameter onto the blockchain). It should also be understood that a state of the group parameter (e.g., whether to be revoked) may also be maintained and submitted to the blockchain by the first device; alternatively, a state of the group parameter may be maintained and submitted to the blockchain by the first service node.

The way for the first device to obtain the group parameter corresponding to the group to which the plurality of target devices belong may be that the first device extracts the group parameter corresponding to the group to which the plurality of target devices belong from the root node of the Merkle tree.

After receiving the third message, the first device may extract the identifiers of the plurality of target devices from the third message, and then generate identity information of the plurality of target devices based on an identifier of each target device in the plurality of target devices. Specifically, the processing of obtaining the identity information may include: determining a leaf node corresponding to each target device based on the identifier of each target device in the plurality of target devices; determining one or more parameter values corresponding to each target device based on the leaf node corresponding to each target device; and using both the identifier of each target device and the one or more parameter values corresponding to each target device as the identity information.

Considering an example where any target device is a kth target device, determining one or more parameter values corresponding to each target device based on the leaf node corresponding to each target device may include: determining a previous-level intermediate node of the leaf node corresponding to the kth target device based on a leaf node corresponding to an identifier of the kth target device, and using the previous-level intermediate node of the leaf node corresponding to the kth target device as a current node; determining an adjacent node that shares the same parent node as the current node and extracting a parameter value stored in the adjacent node as a first parameter value corresponding to the kth target device; and determining whether the parent node of the current node is a root node; if so, using the first parameter value corresponding to the kth target device as a parameter value corresponding to the target device; if not, using the parent node of the current node as a new current node, and continuing to determine an adjacent node that shares the same parent node as the new current node and extracting a parameter value stored in the adjacent node as a second parameter value corresponding to the kth target device, repeating the process until a parent node of a current node is determined to be the root node, thus obtaining one or more parameter values corresponding to the kth target device. Here, k is an integer greater than or equal to 0, or k is an integer greater than or equal to 1.

It should be noted that the one or more parameter values corresponding to the kth target device may be in a form of a sequence or an array, and the one or more parameter values corresponding to the kth target device may be arranged in order in the array (or sequence). The order of the one or more parameter values corresponding to the kth target device may be arranged according to an extraction order, for example, arranging the first extracted parameter value at the beginning (e.g., a first position in an array or sequence), and so on, arranging the last extracted parameter value at the end (or tail) (e.g., a last position in an array or sequence). Alternatively, the order of the one or more parameter values corresponding to the kth target device may be arranged according to levels of intermediate nodes corresponding to the parameter values in the Merkle tree, for example, sorting according to the levels of the intermediate nodes corresponding to the parameter values in the Merkle tree from low to high (where low refers to be closest to the leaf node and high refers to be closest to the root node). For example, a parameter value extracted from an intermediate node closest to the leaf node may be arranged at the beginning (or the first position) (e.g., a first position in an array or sequence), and so on, arranging a parameter value extracted from an intermediate node closest to the root node at the end (or tail) (e.g., a last position in an array or sequence).

It should be understood that the same processing is performed for each target device as for the kth target device, and thus the processing for each target device is not described in detail.

Taking FIG. 4a as an example, assuming the plurality of target devices include a target device 0 and a target device 4. A leaf node 40 stores an ID₀ of the target device 0. A previous-level intermediate node of the leaf node 40 is an intermediate node 410, a parent node of the intermediate node 410 is a node 421, and an adjacent node of the intermediate node 410 that shares the same parent node 421 is an intermediate node 411. Then, a parameter value N₁ (specifically equal to Hash(ID₁)) in the intermediate node 411 is extracted as a parameter value corresponding to the target device 0. Since the previous-level parent node 421 of the intermediate node 410 is not the root node, the parent node 421 is used as a current node 421, and a parameter value N₉ (specifically equal to Hash(N₂+N₃)) is extracted from an adjacent node 422 that shares the same parent node 431 as the current node 421. Since the previous-level parent node 431 of the current node 421 is not the root node, the parent node 431 is used as a current node 431, and a parameter value N₁₃ (specifically equal to Hash(N₁₀+N₁₁)) is extracted from an adjacent node 432 that shares the same parent node as the current node 431. The parent node of the current node 431 is the root node 440. Then, a plurality of parameter values corresponding to the target device 0 may be obtained, namely N₁, N₉ and N₁₃. A leaf node 44 stores an ID₄ of the target device 4. The same processing is performed on the target device 4 as the aforementioned target device 0, and finally a plurality of parameter values corresponding to the target device 4 are obtained, namely N₃, N₁₁ and N₁₂. After the above processing, one or more parameter values corresponding to each target device may be obtained; then an identifier of each target device and the one or more parameter values corresponding to each target device are used together as the identity information. For example, still referring to the above example, the identity information includes: ID₀, N₁, N₉, N₁₃, ID₄, N₅, N₁₁ and N₁₂.

In an embodiment, the group information may be generated by another device. Furthermore, the group information may be generated by the other device and then configured for the first device. Accordingly, the processing of the first device obtaining the identity information of the plurality of target devices may include that the first device may obtain the identity information and the group parameter of the plurality of target devices based on the configured group information.

In some embodiments, obtaining the identity information of the plurality of target devices may be that the first device obtains the identity information of the plurality of target devices from the other device. That is, the identity information of the plurality of target devices may be configured or transmitted by the other device for the first device. The specific transmitting method is not limited and exhaustively listed in the embodiments. For example, the processing of the first device obtaining the identity of the plurality of target devices may include that the first device may transmit the identifiers of the plurality of target devices to the other device and receive the identity information of the plurality of target devices transmitted by the other device.

Optionally, the group parameter may be obtained by the first device from another device, and the group parameter is calculated by the other device based on the identifiers of the plurality of devices. For example, the processing of the first device may include that the first device may transmit the identifiers of the plurality of target devices to the other device, and receive the identity information and the group parameter of the plurality of target devices transmitted by the other device.

In some embodiments, the first message may carry the group parameter and the identity information of the plurality of target devices. Accordingly, the processing of the second device after receiving the first message may include: calculating identity verification values of the plurality of target devices based on both the identifier of each target device and the one or more parameter values corresponding to each target device in the identity information; and authenticating the plurality of target devices based on the identity verification values of the plurality of target devices and the group parameter.

Considering an example where any target device in the plurality of target devices is the kth target device, the aforementioned calculating the identity verification values of the plurality of target devices based on both the identifier of each target device in the plurality of target devices and the one or more parameter values corresponding to each target device contained in the identity information of the plurality of target devices may include: extracting an identifier of the kth target device and each parameter value corresponding to the kth target device, contained in the identity information of the plurality of target devices; performing hash calculation on the identifier of the kth target device to obtain a hash value of the identifier of the kth target device; and calculating the identity verification value of the kth target device based on the hash value of the identifier of the kth target device and each parameter value corresponding to the kth target device.

In an embodiment, an identifier of each device in the group is used as a leaf node in the Merkle tree of the group information; alternatively, an identifier of the first device and an identifier of each device in the group are used as leaf nodes in the Merkle tree of the group information.

As described in the foregoing embodiments, one or more parameter values corresponding to the kth target device may be in a form of a sequence or an array, and the one or more parameter values corresponding to the kth target device may be arranged in order in the array (or sequence). Accordingly, calculating the identity verification value of the kth target device based on the hash value of the identifier of the kth target device and each parameter value corresponding to the kth target device may include the following contents.

A first parameter value is extracted based on the sorting of each parameter value corresponding to the kth target device, a sum of the first parameter value and a hash value of the identifier of the kth target device is calculated to obtain a first initial value, and hash calculation is performed on the first initial value to obtain a first verification value. If there is a remaining unextracted parameter value after the first parameter value, an nth parameter value is extracted based on the sorting of each parameter value corresponding to the kth target device, a sum of the nth parameter value and the (n-1)th verification value is calculated to obtain an nth initial value, and hash calculation is performed on the nth initial value to obtain an nth verification value. Here, n is an integer greater than or equal to 2. In a case where n is equal to 2, the (n-1)th verification value is the first verification value. If there is a remaining unextracted parameter value after the nth parameter value, an (n+1)th parameter value is extracted based on the sorting of each parameter value corresponding to the kth target device, a sum of the (n+1)th parameter value and the nth verification value is calculated to obtain an (n+1)th initial value, and hash calculation is performed on the (n+1)th initial value to obtain an (n+1)th verification value. If it is determined that there is no remaining parameter value after the currently extracted (n+1)th parameter value, the last obtained (n+1)th verification value is used as the identity verification value of the kth target device. In other words, the processing of extracting a next parameter value based on the sorting of each parameter value corresponding to the kth target device and calculating an verification value is repeated until the currently extracted parameter value is determined to be the last parameter value corresponding to the kth target device. The last obtained verification value is used as the identity verification value of the kth target device.

It should be understood that the kth target device is any of the plurality of target devices, and the same processing is performed on each target device as on the kth target device to obtain an identity verification value of each target device. Thus, the processing related to each target device is not described in detail here.

Still considering the example where any target device is the kth target device, authenticating the plurality of target devices based on the identity verification values of the plurality of target devices and the group parameter may include one of the following: in a case where the identity verification value of the kth target device is the same as the group parameter, it is determined that the authentication of the kth target device is successful; and in a case where the identity verification value of the kth target device is the same as the group parameter, it is determined that the authentication of the kth target device is failed. The statement that the authentication of the kth target device is successful may also be expressed interchangeably as that the kth target device is successfully authenticated, or the authentication of the kth target device is passed, or the identity of the kth target device is successfully authenticated, or the like, and exhaustive enumeration is not made here. The statement that the authentication of the kth target device is failed may also be expressed interchangeably as that the authentication of the kth target device fails, or the authentication of the kth target device does not pass, or the authentication of the identity of the kth target device fails, or the like, and exhaustive enumeration is not made here.

An illustrative explanation is made in combination with FIG. 4a, assuming the identifier of the kth target device is the ID₀ shown in FIG. 4, and one or more parameter values corresponding to the kth target device are N₁, N₉ and N₁₃ shown in FIG. 4. Accordingly, the second device verifying the kth target device may perform the following processing: calculating *N*₀*' =H*(*ID*₀) ; calculating *N*₈*' = Hash*(*N*₀*' +N*₁) based on the first parameter value N₁ corresponding to the kth target device; calculating *N*₁₂*' = Hash*(*N*₈' *+ N*₉) based on the second parameter value N₉ corresponding to the kth target device; calculating *Root' = Hash*(*N*₁₂*' + N*₁₃) based on the third parameter value N₁₃ corresponding to the kth target device; and comparing the group parameter *Root* and the calculated *Root' ,* if *Root' = Root , ID*₀ ∈ *Root* , that is, the authentication of the kth target device is successful; otherwise, *ID*₀ ∉ *Root* , that is, the authentication of the kth target device fails.

Since the kth target device is any of the plurality of target devices, the same processing is performed on each target device as on the kth target device to obtain an authentication result of each target device. Therefore, the processing related to each target device is not described in detail here. It should be noted that the above authentication processing may be performed on each target device on the second device side, thereby obtaining the authentication result of each target device. In a case where the authentication of each target device is successful, it may be determined that the authentication of the plurality of target devices is successful.

In an embodiment, an identifier of each device in the group is used as a leaf node in the Merkle tree of the group information, but an identifier of the first device is included when the group parameter is calculated.

In an example, the group parameter may be calculated as follows: obtaining a parameter value stored in each child node in the plurality of child nodes corresponding to the root node; summing the parameter values stored in all the child nodes to obtain a second value and performing hash calculation on the second value to obtain a first hash value; performing hash calculation on the identifier of the first device to obtain a second hash value; and summing the first hash value and the second hash value to obtain the group parameter corresponding to the root node.

Still considering the example where any target device is the kth target device, in this case, calculating the identity verification value of the kth target device based on the hash value of the identifier of the kth target device and each parameter value corresponding to the kth target device may include the following contents.

A first parameter value is extracted based on the sorting of each parameter value corresponding to the kth target device, a sum of the first parameter value and a hash value of the identifier of the kth target device is calculated to obtain a first initial value, and hash calculation is performed on the first initial value to obtain a first verification value. If there is a remaining unextracted parameter value after the first parameter value, an nth parameter value is extracted based on the sorting of each parameter value corresponding to the kth target device, a sum of the nth parameter value and the (n-1)th verification value is calculated to obtain an nth initial value, and hash calculation is performed on the nth initial value to obtain an nth verification value. Here, n is an integer greater than or equal to 2. In a case where n is equal to 2, the (n-1)th verification value is the first verification value. If there is a remaining unextracted parameter value after the nth parameter value, an (n+1)th parameter value is extracted based on the sorting of each parameter value corresponding to the kth target device, a sum of the (n+1)th parameter value and the nth verification value is calculated to obtain an (n+1)th initial value, and hash calculation is performed on the (n+1)th initial value to obtain an (n+1)th verification value. If it is determined that there is no remaining parameter value after the currently extracted (n+1)th parameter value, hash calculation is performed on the identifier of the first device to obtain a second hash value to be verified, and the (n+1)th verification value and the second hash value to be verified are summed to obtain the identity verification value of the kth target device. In other words, the processing of extracting a next parameter value based on the sorting of each parameter value corresponding to the kth target device and calculating an verification value is repeated until the currently extracted parameter value is determined to be the last parameter value corresponding to the kth target device. The last obtained verification value and the second hash value to be verified that is obtained by the hash calculation on the identifier of the first device are summed to obtain the identity verification value of the kth target device.

In the example, the relevant description of authenticating the plurality of target devices based on the identity verification values of the plurality of target devices and the group parameter is the same as that in the previous embodiment, and details are not repeated.

In an example, the group parameter may be calculated as follows: obtaining a parameter value stored in each child node in the plurality of child nodes corresponding to the root node; summing the parameter value stored in each child node and the identifier of the first device to obtain a second value and performing hash calculation on the second value to obtain a first hash value; and using the first hash value as the group parameter corresponding to the root node.

In this case, calculating the identity verification value of the kth target device based on the hash value of the identifier of the kth target device and each parameter value corresponding to the kth target device may include the following contents.

A first parameter value is extracted based on the sorting of each parameter value corresponding to the kth target device, a sum of the first parameter value and a hash value of the identifier of the kth target device is calculated to obtain a first initial value, and hash calculation is performed on the first initial value to obtain a first verification value. If there is a remaining unextracted parameter value after the first parameter value, an nth parameter value is extracted based on the sorting of each parameter value corresponding to the kth target device, a sum of the nth parameter value and the (n-1)th verification value is calculated to obtain an nth initial value. If there is a remaining parameter value after the nth parameter value, hash calculation is performed on the nth initial value to obtain an nth verification value. Here, n is an integer greater than or equal to 2. In a case where n is equal to 2, the (n-1)th verification value is the first verification value. If there is a remaining unextracted parameter value after the nth parameter value, an (n+1)th parameter value is extracted based on the sorting of each parameter value corresponding to the kth target device, a sum of the (n+1)th parameter value and the nth verification value is calculated to obtain an (n+1)th initial value. If it is determined that there is no remaining parameter value after the currently extracted (n+1)th parameter value, the (n+1)th initial value and the identifier of the first device are summed to obtain an (n+1)th value to be processed. Hash calculation is performed on the (n+1)th value to be processed to obtain an (n+1)th verification value, and the last obtained (n+1)th verification value is used as the identity verification value of the kth target device. In other words, the processing of extracting a next parameter value based on the sorting of each parameter value corresponding to the kth target device and performing hash calculation to obtain an verification value is repeated until the currently extracted parameter value is determined to be the last parameter value corresponding to the kth target device. The last obtained initial value and the identifier of the first device are summed and then hash calculation is performed to obtain a last verification value. The last verification value is used as the identity verification value of the kth target device.

In the example, the relevant description of authenticating the plurality of target devices based on the identity verification values of the plurality of target devices and the group parameter is the same as that in the previous embodiment, and details are not repeated.

In an embodiment, after the second device receives the first message, the processing may further include: the second device extracting the group parameter from the first message; and the second device checking on the blockchain whether the group parameter has been revoked.

Here, the second device checking on the blockchain whether the group parameter has been revoked may mean that the second device searches the blockchain for the group parameter and obtains a state of the group parameter. The state of the group parameter may include the group parameter having been revoked, or the group parameter being normal (or having not been revoked).

In an example, the processing of the second device checking on the blockchain whether the group parameter has been revoked may be performed before authenticating the plurality of target devices based on the identity verification values of the plurality of target devices and the group parameter. That is, if the group parameter has not been revoked, the second device may perform the processing of authenticating the plurality of target devices based on the identity verification values of the plurality of target devices and the group parameter. In an example, the processing of the second device checking on the blockchain whether the group parameter has been revoked may be performed after authenticating the plurality of target devices based on the identity verification values of the plurality of target devices and the group parameter. That is, after the authentication of the plurality of target devices based on the identity verification values of the plurality of target devices and the group parameter is successful, the second device checks whether the group parameter has been revoked. If the group parameter has not been revoked, the second device may determine that the authentication of the plurality of target devices has been completed.

Through the above processing, authentication may be initiated by the second device, and then the first device may act as a proxy to generate the identity information of each target device and report the identity information to the second device. Then the second device may complete the processing of the authentication of the plurality of target devices based on the identity information of each target device. This may improve the efficiency of authenticating at least part of the devices in a group.

In some possible implementations, certificate-related authentication may also be added between the first device and the second device.

In the processing of the first device, the method further includes: receiving an address of a second certificate from the second device, where the second certificate is a certificate of the second device.

In the implementations, the second device may initiate authentication by transmitting the third message, and thus the address of the second certificate may be carried by the third message. In other words, the third message further carries the address of the second certificate, where the second certificate is the certificate of the second device. The second certificate is stored on the blockchain. Therefore, the address of the second certificate specifically refers to an address of the second certificate on the blockchain, or location information of the second certificate on the blockchain. That is, when the second device initiates the authentication process, the second device (i.e., the authentication function entity) transmits the third message carrying the address of its second certificate and the identifier of each target device in the plurality of target devices to the first device.

The address of the second certificate may be obtained when the second device is registered. The registration processing for the second device may include: the second device submitting an identifier (e.g., ID) of the second device, a public key (e.g., expressed as PK) and other public information, along with a signature (e.g., expressed as *σ*) of the above information, to an issuing node; the issuing node verifying the identity of the second device (i.e., the identifier of the second device and the public key) and other information, and then performing signing with a private key of the issuing node to generate the second certificate of the second device; the issuing node uploading the generated second certificate to the blockchain and obtaining the location information of the certificate on the blockchain; and the issuing node issuing the second certificate to the second device and transmitting the location information of the second certificate on the blockchain to the second device.

Accordingly, the processing of the first device may further include: authenticating the identity of the second device based on the address of the second certificate.

Specifically, authenticating the identity of the second device based on the address of the second certificate may include: the first device checking the second certificate on the blockchain based on the location information (or the address) of the second certificate on the blockchain; and determining the identity authentication of the second device to be successful in a case where the second certificate is found and it is determined that the second certificate has not been revoked. In addition, authenticating the identity of the second device based on the address of the second certificate may further include: determining the identity authentication of the second device to be failed in a case where the second certificate is not found and/or it is determined that the second certificate has been revoked.

Here, in the processing of the first device, the method further includes: receiving auxiliary information related to the second certificate from the second device. The auxiliary information related to the second certificate may also be carried in the third message, that is, the third message may further carry the auxiliary information related to the second certificate. A method by which the first device determines whether the second certificate has been revoked may include: the first device verifying whether the second certificate has been revoked based on the auxiliary information related to the second certificate and a product of all revoked revocation factors maintained by a certificate issuing node corresponding to the second device, so as to obtain a result of whether the second certificate has been revoked. A function of the auxiliary information related to the second certificate is to prove that the second certificate has not been revoked (or has been revoked). The specific content of the auxiliary information related to the second certificate is not limited in the embodiments.

In the implementations, the processing of the first device transmitting the first message to the second device may be that the first device transmits the first message to the second device in a case of determining that the identity authentication of the second device is successful based on the address of the second certificate.

The first message may further carry an address of a third certificate, the third certificate is a certificate of a first service node to which the first device belongs, and the third certificate is used to authenticate the identity of the first service node. That is, in addition to carrying the group parameter and the identity information of the plurality of target devices, the first message may further carry the address of the third certificate.

The third certificate is stored on the blockchain. Therefore, the address of the third certificate specifically refers to an address of the third certificate on the blockchain, or location information of the third certificate on the blockchain.

The address of the third certificate may be obtained when the first device is registered. The registration process for the first device may include that: the first device transmits an identity verification material to the first service node (or may be referred to as a first KGC), where the identity verification material may include at least the identifier of the first device, and the identity verification material may be carried in a registration request; upon receiving the identity verification material of the first device, the first service node reviews the identity verification material of the first device; if the review is passed, the first service node generates a private key corresponding to the first device based on its own master private key (e.g., denoted as s) using a key generation algorithm; the first service node transmits a private key corresponding to the first device and the address of the third certificate of the first service node to the first device, and thus the first device is successfully registered.

Accordingly, the processing of the second device may further include: authenticating the identity of the first service node based on the address of the third certificate.

Specifically, authenticating the identity of the first service node based on the address of the third certificate may include: the second device checking the third certificate on the blockchain based on the location information (or the address) of the third certificate on the blockchain; and determining the identity authentication of the first service node to be successful in a case where the third certificate is found and it is determined that the third certificate has not been revoked. In addition, authenticating the identity of the first service node based on the address of the third certificate may further include: determining the identity authentication of the first service node to be failed in a case where the third certificate is not found and/or it is determined that the third certificate has been revoked.

Here, the first message may further carry auxiliary information related to the third certificate. A method of determining whether the third certificate has been revoked may include: the second device verifying whether the third certificate has been revoked based on the auxiliary information related to the third certificate and a product of all revoked revocation factors maintained by a certificate issuing node corresponding to the first service node to which the first device belongs, so as to obtain a result of whether the third certificate has been revoked. A function of the auxiliary information related to the third certificate is to prove that the third certificate has not been revoked (or has been revoked). The specific content of the auxiliary information related to the third certificate is not limited in the embodiments.

In a preferred example, an execution timing of the second device authenticating the identity of the first service node based on the address of the third certificate may be before the second device authenticating the plurality of target devices based on the identity verification values of the plurality of target devices and the group parameter. In an alternative example, an execution timing of the second device authenticating the identity of the first service node based on the address of the third certificate may be after the second device authenticating the plurality of target devices based on the identity verification values of the plurality of target devices and the group parameter.

Through the above processing, authentication may be initiated by the second device, and then the first device may act as a proxy to generate the identity information of each target device and report the identity information to the second device. Then the second device may complete the processing of the authentication of the plurality of target devices based on the identity information of each target device. In the above authentication process, the identity authenticate performed by the first device on the second device through the address of the second certificate of the second device, and the identity authenticate performed by the second device on the first service node through the address of the third certificate of the first service node to which the first device belongs are added. This may improve the efficiency of authenticating at least part of the devices in a group, and ensure the identity authentication for multi-party devices and guarantee the accuracy of the authentication.

In some possible implementations, signature-related authentication may also be added between the first device and the second device.

In the implementations, the first message further carries a first signature for authenticating the first device. The first signature is calculated based on the private key corresponding to the group parameter.

The first message may further carry at least one of the following: an identifier of the first device or a security parameter of the first device. That is, in addition to carrying the first signature, the first message may further carry at least one of the identifier of the first device or the security parameter of the first device.

The first signature is calculated based on the private key corresponding to the group parameter and at least one of the following parameters: an identifier of the first device, a security parameter of the first device, an identifier of the second device, a first random number or a second random number. That is, the first signature is calculated using the private key corresponding to the group parameter and the parameter(s) used for calculating the first signature. The parameter(s) used for calculating the first signature may be at least one of the identifier of the first device, the security parameter of the first device, the identifier of the second device, the first random number or the second random number.

The content carried in the first message may be completely or partially related to the parameter(s) used for calculating the first signature. In an example, the content carried in the first message may be completely related to the parameter(s) used for calculating the first signature. For example, the parameter(s) used for calculating the first signature include the identifier of the first device and the security parameter of the first device. In addition to carrying the first signature, the first message further carries the identifier of the first device and the security parameter of the first device. In an example, the content carried in the first message may be partially related to the parameter(s) used for calculating the first signature. For example, the parameter(s) used for calculating the first signature may include the identifier of the first device and the security parameter of the first device, but the first message may only carry the security parameter of the first device. As another example, the parameter(s) used for calculating the first signature may include the security parameter of the first device, but the first message may carry the identifier of the first device and the security parameter of the first device. It should be understood that the above is only an illustrative example. In actual processing, as long as the first message carries at least the security parameter of the first device and the parameter(s) used for calculating the first signature include at least the security parameter of the first device, the contents will be within the protection scope of the embodiments, and not all possible situations are limited or exhaustively listed here.

Here, the private key corresponding to the group parameter may be pre-configured, that is, the private key corresponding to the group parameter may be pre-stored in the first device. The first device obtaining or storing the private key corresponding to the group parameter may be achieved in the processing of the first device acting as a proxy device for a plurality of devices in a group and assisting each device in the group to register. For example, the processing of the first device may include that: the first device receives an identity verification material of an mth device in the group, where the identity verification material of the mth device may include at least the identifier of the mth device (e.g., a factory ID of the mth device); the first device updates contents stored in at least part of nodes of a Merkle tree corresponding to a group to which the mth device belongs based on the identifier of the mth device, so as to obtain the updated Merkle tree; the first device transmits the identity verification material of the mth device, the identifier of the first device and the group parameter stored in the root node of the updated Merkle tree to the first service node; and the first device receives the private key corresponding to the group parameter transmitted by the first service node. Here, a method by which the first service node generates the private key corresponding to the group parameter may be that the first service node reviews the identity verification material of the mth device, the identifier of the first device and the group parameter stored in the root node of the updated Merkle tree; and the first service node generates the private key corresponding to the group parameter using a key generation algorithm after the review is passed. The above describes the registration process for any device in a group for which the first device acts as a proxy. The registration process for each device in the same group is the same as that for the mth device, and details are not repeated. Here, m may be an integer greater than or equal to 1.

The function of the security parameter of the first device may be to obtain a session key by combining the security parameter of the second device, and the session key is used for communication between the first device and the second device. The security parameter of the first device may also be called a key generation parameter of the first device, a security calculation parameter of the first device, or the like. In some possible examples, the security parameter of the first device may be expressed as a DH (Diffie-Hellman) parameter of the first device.

A method by which the first device calculates the first signature may be that: the first device calculates the first signature using a signature algorithm and based on the private key corresponding to the group parameter and the parameters used for calculating the first signature. The signature algorithm includes at least one of the following: a RSA algorithm, an SM2 algorithm, a JSON Web Signatures (JWS) algorithm, an elliptic curve-based signature algorithm, or the like. Here, the SM2 algorithm is a domestically developed algorithm launched by the State Cryptography Administration of China, and is an elliptic curve-based asymmetric algorithm. The signature algorithms are not exhaustively listed or limited here.

A method by which the first device calculates the first signature may include: the first device performing calculation on the parameters used for calculating the first signature based on the private key corresponding to the group parameter, so as to obtain the first signature.

For example, the parameters used for calculating the first signature may include the identifier of the first device and the DH parameter of the first device. The calculation of the first signature by the first device may be expressed as *Sig_{Root}*(*ID_{A}*, *X_{A}·P*), where Sig() represents the signature algorithm, Root represents the private key corresponding to the group parameter, *ID_{A}* represents the identifier of the first device, and *X_{A}·P* represents the DH parameter of the first device. In this case, the first signature is generated by the identifier of the first device, and a function of the first signature in this case is at least to enable the second device to authenticate the first device; moreover, the first signature is generated by the DH parameter of the first device, so that the first signature not only has the function of the second device authenticating the first device, but also has a function of authenticating validity and integrity of the DH parameter of the first device. It should be noted that the above is only an illustrative example. As actual needs change, in some other possible examples, the parameters used for calculating the first signature may only include the DH parameter of the first device.

The signature algorithm may include hash calculation and encryption calculation. Accordingly, the first device performing calculation, based on the private key corresponding to the group parameter, on the parameters used for calculating the first signature to obtain the first signature may include that: the first device performs hash calculation on the parameters used for calculating the first signature to obtain a first hash value, and the first device encrypts the first hash value based on the private key corresponding to the group parameter to obtain the first signature. Here, the hash calculation may be a secure hash algorithm (SHA), and more specifically, the SHA may be a SHA-256. It should be understood that this is only an illustrative example. In actual processing, any hash calculation algorithm is within the protection scope of the embodiments, and all possible hash calculation algorithms are not exhaustively listed or limited here.

For example, the parameters used for calculating the first signature may include the identifier of the first device and the DH parameter of the first device. The calculation of the first signature by the first device may be expressed as *Sig_{Root}*(*H*(*ID_{A}*, *X_{A}·P*)), where Sig() represents the signature algorithm, Root represents the private key corresponding to the group parameter, H() represents the hash calculation, *ID_{A}* represents the identifier of the first device, and *X_{A}·P* represents the DH parameter of the first device.

In an embodiment, the processing of the first device may further include: receiving at least one of the first random number or the identifier of the second device from the second device.

When the second device initiates authentication via a third message, at least one of the first random number or the identifier of the second device may be carried by the third message. That is, the third message further carries at least one of the following: the first random number or the identifier of the second device. The first random number mentioned above may be generated before the second device transmits the third message. The method by which the second device generates the first random number is not limited in the embodiment.

In the embodiment, in addition to the identifier of the first device and/or the security parameter of the first device, the parameters used for calculating the first signature may further include at least one of the following: the identifier of the second device or the first random number.

For example, the parameters used for calculating the first signature may include the identifier of the first device, the DH parameter of the first device, the identifier of the second device and the first random number. The calculation of the first signature by the first device may be expressed as *Sig_{Root}*(*N_{D},ID_{D},ID_{A}*,*X_{A}·P*), where *N_{D}* represents the first random number, *ID_{D}* represents the identifier of the second device, the remaining contents in the formula have the same meanings as that in the aforementioned embodiments, and detail are not repeated.

For example, the parameters used for calculating the first signature may include the identifier of the first device, the DH parameter of the first device, the identifier of the second device and the first random number. The calculation of the first signature by the first device may be expressed as *Sig_{Root}* (*H*(*N_{D}*,*ID_{D}*,*ID_{A}*,*X_{A}·P*)), where each content in the formula has the same meaning as that in the aforementioned embodiments, and detail are not repeated.

In an embodiment, the first message may further carry a second random number. The second random number mentioned above may be generated by the first device before calculating the first signature. The method by which the first device generates the second random number is not limited in the embodiment.

In the embodiment, in addition to the identifier of the first device and/or the security parameter of the first device, the parameters used for calculating the first signature may further include the second random number. Alternatively, in addition to the identifier of the first device and/or the security parameter of the first device, the parameters used for calculating the first signature may further include at least one of the following: the identifier of the second device, the first random number or the second random number.

For example, the parameters used for calculating the first signature may include the identifier of the first device, the DH parameter of the first device, the identifier of the second device, the first random number and the second random number. The calculation of the first signature by the first device may be expressed as *Sig_{Root}*(*N_{D}*,*N_{A}*,*ID_{D}*,*ID_{A}*,*X_{A}·P*), where *N_{A}* represents the second random number, the remaining contents in the formula have the same meanings as that in the aforementioned embodiments, and detail are not repeated.

For example, the parameters used for calculating the first signature may include the identifier of the first device, the DH parameter of the first device, the identifier of the second device, the first random number and the second random number. The calculation of the first signature by the first device may be expressed as *Sig_{Root}*(*H*(*N_{D}*,*N_{A}*,*ID_{D}*,*ID_{A}*,*X_{A}*·*P*)), where each content in the formula has the same meaning as that in the aforementioned embodiments, and detail are not repeated.

In the examples, by signing the identifier *ID_{D}* of the second device, a function of the identifier of the second device may be to enable the second device to determine that the first device has received the third message transmitted by the second device, or a function of the identifier of the second device may be to indicate to the second device that the first device has received the third message transmitted by the second device. The signature for *ID_{A}* may enable the second device not to consider the corresponding first message as a spam message, and enable the second device to determine that the message is transmitted to itself by the first device, as well as that the first device has received the third message from itself. When signing the first random number and the second random number, the first random number and the second random number may be nonce values. The function of the nonce values is to determine that the corresponding message is not a replay message. The signature for the security parameter of the first device is to prevent man-in-the-middle attacks inherent in the Diffie-Hellman key exchange protocol.

It should be understood that the above contents are all exemplary descriptions of calculating the first signature. The calculation method of the first signature is not limited or exhaustively described here, nor are all possible combinations of the parameters used for calculating the first signature participating in the calculation of the first signature, as long as at least one of the above parameters used for calculating the first signature is used when actually calculating the first signature, the contents are within the protection scope of the embodiments.

After the second device receives the first message carrying the first signature for authenticating the first device, the processing of the second device may further include: authenticating the first device based on the group parameter and the first signature.

An execution timing of the second device authenticating the first device based on the group parameter and the first signature may be after the identity authentication of the first service node to which the first device belongs is determined to be successful based on the address of the third certificate. Furthermore, the processing of the second device authenticating the first device based on the group parameter and the first signature may be performed after the identity authentication of the first service node to which the first device belongs is determined to be successful based on the address of the third certificate, and after the plurality of target devices have been successfully authenticated.

Specifically, the processing of the second device may include authenticating the first device based on the group parameter, the first signature and at least one of the following parameters: the identifier of the first device, the security parameter of the first device, the identifier of the second device, a first random number or a second random number. Here, the group parameter may be used directly as the public key. At least one of the identifier of the first device, the security parameter of the first device, the identifier of the second device, the first random number or the second random number may be the parameters used by the second device to verify the first signature. The parameters used for verifying the first signature should be the same as the parameters used by the first device for calculating the first signature.

In an embodiment, the first message further carries at least one of the following: the identifier of the first device or the security parameter of the first device. The second device may determine the parameters used for verifying the first signature based on the first message, where the parameters used for verifying the first signature may be completely or partially related to the first message. In an example, the first message carries only the security parameter of the first device. In this case, the second device may use only the security parameter of the first device as the parameters used for verifying the first signature. In an example, the first message carries only the security parameter of the first device. In this case, the second device may obtain the identifier of the first device in advance, and then use the identifier of the first device and the security parameter of the first device together as the parameters used for verifying the first signature. In an example, the first message carries the identifier of the first device and the security parameter of the first device. The second device may use only the security parameter of the first device as the parameters used for verifying the first signature, or the second device may use both the identifier of the first device and the security parameter of the first device as the parameters used for verifying the first signature. It should be understood that the above is only an illustrative example. In actual processing, as long as the first device and the second device may use the same parameters for verifying the first signature and calculating the first signature, the contents are within the protection scope of the embodiments, and not all possible situations are limited or exhaustively listed here.

In an embodiment, the processing of the second device before receiving the first message further includes: transmitting the first random number to the first device.

When the second device initiates authentication via a third message, at least one of the first random number or the identifier of the second device may be carried by the third message. That is, the third message further carries at least one of the following: the first random number or the identifier of the second device. In such embodiments, the second device may determine the parameters used for verifying the first signature based on the third message and the first message. The parameters used for verifying the first signature are completely or partially related to the third message and the first message. That is, in a case where the third message carries the first random number and the identifier of the second device, in addition to adding the identifier of the first device and/or the security parameter of the first device to the parameters used for verifying the first signature, the second device may further add at least one of the identifier of the second device or the first random number to the parameters used for verifying the first signature.

In an embodiment, the first message may further carry the second random number. In the embodiment, in addition to adding the identifier of the first device and/or the security parameter of the first device to the parameters used for verifying the first signature, the second device may further add at least one of the identifier of the second device, the first random number or the second random number to the parameters used for verifying the first signature.

The first device is authenticated based on the group parameter, the first signature and at least one of the following parameters: the identifier of the first device, the security parameter of the first device, the identifier of the second device, a first random number or a second random number, which may be that: the second device decrypts the first signature using a signature verification algorithm and based on the group parameter to obtain first decryption information, and authenticates the first device based on the first decryption information and the parameters used for verifying the first signature.

Furthermore, in the above processing, in addition to using the group parameter as a public key to verify the first signature, a master public key of the first service node to which the first device belongs may further be used to verify the first signature. That is, the second device decrypting the first signature using the signature verification algorithm and based on the group parameter to obtain the first decryption information may mean that the second device decrypts the first signature using the signature verification algorithm and based on both the group parameter and the master public key of the first service node to which the first device belongs to obtain the first decryption information. The master public key of the first service node may be stored in the third certificate. In other words, the processing of the second device authenticating the first device based on the group parameter and the first signature may be performed after the identity of the first service node is authenticated based on the address of the third certificate. The specific processing method for the second device obtaining the third certificate has been explained in the foregoing embodiments, and details are not repeated here.

Optionally, the first decryption information may include a first parameter to be verified that has the same content type as the parameter(s) used for verifying the first signature. Authenticating the first device based on the first decryption information and the parameters used for verifying the first signature may include one of the following: in a case where the first parameter to be verified is the same as the parameter(s) used for verifying the first signature, determining the authentication of the first device to be successful; and in a case where the first parameter to be verified is different from the parameter(s) used for verifying the first signature, determining the authentication of the first device to be failed. In the embodiment, the contents of the composition of the parameter(s) used for verifying the first signature have been described in detail in the foregoing embodiments, and details are not repeated here.

Optionally, the first decryption information may include a first decryption hash value. Authenticating the first device based on the first decryption information and the parameters used for verifying the first signature may include: the second device performing hash calculation on the parameters used for verifying the first signature to obtain a first verification hash value; and authenticating the first device based on the first decryption hash value and the first verification hash value.

Authenticating the first device based on the first decryption hash value and the first verification hash value may include at least one of the following: in a case where the first decryption hash value is the same as the first verification hash value, determining the authentication of the first device to be successful; or in a case where the first decryption hash value is different from the first verification hash value, determining the authentication of the first device to be failed. In the embodiment, the contents of the composition of the parameter(s) used for verifying the first signature have been described in detail in the foregoing embodiments, and details are not repeated here.

In some possible implementations, in a case where the second device successfully authenticates the first device, the processing of the second device may further include: transmitting a second message to the first device, where the second message carries a second signature for authenticating the second device, and the second signature is calculated based on a private key of the second device.

The second signature is calculated based on the private key of the second device and at least one of the following parameters: the identifier of the second device, the security parameter of the second device, the identifier of the first device, a first random number or a second random number. The at least one of the identifier of the second device, the security parameter of the second device, the identifier of the first device, the first random number or the second random number may also be referred to as the parameter(s) for calculating the second signature.

In the embodiments, the second message further carries at least one of the following: the identifier of the second device or the security parameter of the second device.

The content carried in the second message may be completely or partially related to the parameter(s) used for calculating the second signature. In an example, the content carried in the second message may be completely related to the parameter(s) used for calculating the second signature. For example, the parameter(s) used for calculating the second signature include the identifier of the second device and the security parameter of the second device. In addition to carrying the second signature, the second message further carries the identifier of the second device and the security parameter of the second device. In an example, the content carried in the second message may be partially related to the parameter(s) used for calculating the second signature. For example, the parameter(s) used for calculating the second signature may include the identifier of the second device and the security parameter of the second device, but the second message may only carry the security parameter of the second device. As another example, the parameter(s) used for calculating the second signature may include the security parameter of the first device, but the second message may carry the identifier of the second device and the security parameter of the second device. It should be understood that the above is only an illustrative example. In actual processing, as long as the second message carries at least the security parameter of the second device and the parameter(s) used for calculating the second signature include at least the security parameter of the second device, the contents will be within the protection scope of the embodiments, and not all possible situations are limited or exhaustively listed here.

Here, the private key of the second device may be pre-configured, that is, the private key of the second device may be pre-stored in the second device.

Optionally, the parameter(s) used for calculating the second signature may include the security parameter of the second device. The security parameter of the second device is used to obtain a session key by combining the security parameter of the first device, and the session key is used for communication between the first device and the second device.

The processing of the second device calculating the second signature may include that: the second device performs calculation on the security parameter of the second device using a signature algorithm and based on the private key of the second device, so as to obtain the second signature. The description of the signature algorithm is similar to that in the aforementioned embodiments and will not be repeated. For example, the calculation of the second signature by the second device may be expressed as *Sig_{D}*(*X_{D}·P*) , where Sig() represents the signature algorithm, D represents the private key of the second device, and *X_{D}·P* represents the DH parameter of the second device.

The second device performing calculation, using a signature algorithm and based on the private key of the second device, on the security parameter of the second device to obtain the second signature may include that: the second device performs hash calculation on the security parameter of the second device using the signature algorithm to obtain a second hash value, and the second device encrypts the second hash value based on the private key of the second device to obtain the second signature. For example, the calculation of the second signature by the second device may be expressed as *Sig_{D}*(*H*(*X_{D}·P*)), where H() represents hash calculation, the remaining contents in the formula have the same meanings as that in the aforementioned embodiments, and details are not repeated.

Optionally, the parameter(s) for calculating the second signature may include the security parameter of the second device and the identifier of the second device.

The processing of the second device calculating the second signature may include that: the second device performs calculation on the security parameter of the second device and the identifier of the second device using a signature algorithm and based on the private key of the second device, so as to obtain the second signature. The description of the signature algorithm is similar to that in the aforementioned embodiments and will not be repeated. For example, the calculation of the second signature by the second device may be expressed as *Sig_{D}*(*ID_{D}*,*X_{D}·P*), where Sig() represents the signature algorithm, *ID_{D}* represents the identifier of the second device, the remaining contents in the formula have the same meanings as that in the aforementioned embodiments, and details are not repeated.

The second device performing calculation, using a signature algorithm and based on the private key of the second device, on the security parameter of the second device and the identifier of the second device to obtain the second signature may include that: the second device performs hash calculation on the security parameter of the second device and the identifier of the second device using the signature algorithm to obtain a second hash value, and the second device encrypts the second hash value based on the private key of the second device to obtain the second signature. For example, the calculation of the second signature by the second device may be expressed as *Sig_{D}*(*H*(*ID_{D}*,*X_{D}·P*)), where each content in the formula has the same meaning as that in the aforementioned embodiments, and details are not repeated.

In an embodiment, the parameter(s) for calculating the second signature may include, in addition to at least one of the security parameter of the second device or the identifier of the second device, at least one of the following: the identifier of the first device, a first random number or a second random number. The identifier of the first device and the second random number may be carried in the first message transmitted by the first device; and the first random number is generated by the second device and transmitted to the first device.

Optionally, the parameter(s) for calculating the second signature may include the security parameter of the second device and the identifier of the first device.

The processing of the second device calculating the second signature may include that: the second device performs calculation on the security parameter of the second device and the identifier of the first device using a signature algorithm and based on the private key of the second device, so as to obtain the second signature. For example, the calculation of the second signature by the second device may be expressed as *Sig_{D}*(*ID_{A},X_{D}·P*), where *ID_{A}* represents the identifier of the first device, the remaining contents in the formula have the same meanings as that in the aforementioned embodiments, and details are not repeated.

The second device performing calculation, using the signature algorithm and based on the private key of the second device, on the security parameter of the second device and the identifier of the first device to obtain the second signature may include that: the second device performs hash calculation on the security parameter of the second device and the identifier of the first device using the signature algorithm to obtain a second hash value, and encrypts the second hash value based on the private key of the second device to obtain the second signature. For example, the calculation of the second signature by the second device may be expressed as *Sig_{D}*(*H*(*ID_{A}*,*X_{D}·P*))*,* where each content in the formula has the same meaning as that in the aforementioned embodiments, and details are not repeated.

Optionally, the parameter(s) for calculating the second signature may include the security parameter of the second device, the identifier of the second device, the identifier of the first device and the second random number.

The processing of the second device calculating the second signature may include that: the second device performs calculation on the security parameter of the second device, the identifier of the second device, the identifier of the first device and the second random number using a signature algorithm and based on the private key of the second device, so as to obtain the second signature. The description of the signature algorithm is similar to that in the aforementioned embodiments and will not be repeated. For example, the calculation of the second signature by the second device may be expressed as *Sig_{D}*(*X_{D}·P*), where Sig() represents the signature algorithm, *N_{A}* represents the second random number, the remaining contents in the formula have the same meanings as that in the aforementioned embodiments, and details are not repeated.

The second device performing calculation, using a signature algorithm and based on the private key of the second device, on the security parameter of the second device, the identifier of the second device, the identifier of the first device and the second random number to obtain the second signature may include that: the second device performs hash calculation on the security parameter of the second device, the identifier of the second device, the identifier of the first device and the second random number using the signature algorithm to obtain a second hash value, and encrypts the second hash value based on the private key of the second device to obtain the second signature. For example, the calculation of the second signature by the second device may be expressed as *Sig_{D}*(*H*(*N_{A}*,*ID_{A}*,*ID_{D}*,*X_{D}·P*)), where each content in the formula has the same meaning as that in the aforementioned embodiments, and details are not repeated.

It should be understood that the above contents are all exemplary descriptions of calculating the second signature. The calculation method of the second signature is not limited or exhaustively described here, nor are all possible combinations of the parameters used for calculating the second signature, as long as at least one of the above parameters used for calculating the second signature is used when actually calculating the second signature, the contents are within the protection scope of the embodiments.

In some possible implementations, the processing of the first device may include: receiving a second message from the second device, where the second message carries a second signature for authenticating the second device; and authenticating the second device based on a public key associated with the second device and the second signature.

Optionally, the second device may implicitly indicate to the first device that the authentication result for the first device is authentication successful by carrying the second signature for authenticating the second device in the second message. That is, when the first device receives the second message carrying the second signature used for authenticating the second device, the first device may determine that the authentication result of the second device for the first device is authentication successful.

Optionally, the second device may indicate to the first device that the authentication result for the first device is authentication successful by indicating in the second message that the authentication result for the first device is authentication successful.

In addition, in a case where the second device fails to authenticate the first device, the processing of the second device may include: transmitting a group response message to the first device, where the group response message carries an indication of the authentication result for the first device is authentication failed. Accordingly, the processing of the first device may include: receiving a group response message from the second device. Furthermore, the processing of the first device may further include: terminating the processing in a case where the group response message indicates that the authentication result for the first device is authentication failed.

Specifically, authenticating the second device based on the public key associated with the second device and the second signature includes authenticating the second device based on the public key associated with the second device, the second signature, and at least one of the following parameters: the identifier of the second device, the security parameter of the second device, the identifier of the first device, a first random number or a second random number. On the first device side, the identifier of the second device, the security parameter of the second device, the identifier of the first device, the first random number and the second random number may be referred to as parameter(s) for verifying the second signature. The parameter(s) used for verifying the second signature should be the same as the parameter(s) used for calculating the second signature.

Here, the public key associated with the second device refers to a public key of the second device. Specifically, the public key associated with the second device is the public key of the second device stored in the second certificate. The method for obtaining the second certificate has been described in detail in the foregoing embodiments and will not be repeated here.

In an embodiment, the second message further carries at least one of the following: the identifier of the second device or the security parameter of the second device.

The first device may determine the parameter(s) for verifying the second signature based on the second message, and the parameter(s) for verifying the second signature may be completely or partially related to the second message. In an example, the second message carries only the security parameter of the second device. In this case, the first device may use only the security parameter of the second device as the parameter(s) for verifying the second signature. In an example, the second message carries only the security parameter of the first device. In this case, the first device may obtain the identifier of the second device in advance, and then use the identifier of the second device and the security parameter of the second device together as the parameter(s) for verifying the second signature. In an example, the second message carries the identifier of the second device and the security parameter of the second device. The first device may use only the security parameter of the second device as the parameter(s) for verifying the second signature, or the first device may use both the identifier of the second device and the security parameter of the second device as the parameter(s) for verifying the second signature. It should be understood that the above is only an illustrative example. In actual processing, as long as the first device and the second device may use the same parameters for verifying the second signature and calculating the second signature, the contents are within the protection scope of the embodiments, and not all possible situations are limited or exhaustively listed here.

In an embodiment, the parameter(s) for verifying the second signature may include, in addition to at least one of the security parameter of the second device or the identifier of the second device, at least one of the following: the identifier of the first device, a first random number or a second random number. The identifier of the first device and the second random number may be carried in the first message transmitted by the first device. The first random number is transmitted by the first device to the second device. Therefore, both the first device and the second device may obtain the identifier of the first device, the first random number and the second random number.

In an embodiment, the first device decrypts the second signature using a signature verification algorithm and based on the public key of the second device to obtain second decryption information, and authenticates the second device based on the second decryption information and the parameters used for verifying the second signature.

Optionally, the second decryption information may include a second parameter to be verified that has the same content type as the parameter(s) used for verifying the second signature. Authenticating the second device based on the second decryption information and the parameters for verifying the second signature may include one of the following: in a case where the second parameter to be verified is the same as the parameter(s) used for verifying the second signature, determining the authentication of the second device to be successful; and in a case where the second parameter to be verified is different from the parameter(s) for verifying the second signature, determining the authentication of the second device to be failed. In the embodiment, the contents of the composition of the parameter(s) used for verifying the second signature have been described in detail in the foregoing embodiments, and details are not repeated here.

Optionally, the second decryption information may include a second decryption hash value. Authenticating the second device based on the second decryption information and the parameters used for verifying the second signature may include: the first device performing hash calculation on the parameters used for verifying the second signature to obtain a second verification hash value; and authenticating the second device based on the second decryption hash value and the second verification hash value.

Authenticating the second device based on the second decryption hash value and the second verification hash value may include at least one of the following: in a case where the second decryption hash value is the same as the second verification hash value, determining the authentication of the second device to be successful; or in a case where the second decryption hash value is different from the second verification hash value, determining the authentication of the second device to be failed. In the embodiment, the contents of the composition of the parameter(s) used for verifying the second signature have been described in detail in the foregoing embodiments, and details are not repeated here.

Optionally, in a case where the first device determines that the authentication of the second device is failed, the processing of the first device may further include: the first device ending the processing, or the first device transmitting an indication to the second device that the authentication of the second device is failed.

Optionally, in a case where the first device determines that the authentication of the second device is successful, the processing of the first device may further include: the first device transmitting an indication to the second device that the authentication of the second device is successful.

In some possible implementations, before authenticating the second device based on the public key associated with the second device and the second signature, the processing of the first device may further include: verifying whether the second device has been revoked based on the identifier of the second device carried in the second message.

Verifying whether the second device has been revoked based on the identifier of the second device carried in the second message may refer to: the first device searching for a state of the identifier of the second device on the blockchain; in a case where the state corresponding to the identifier of the second device stored on the blockchain is "not revoked", determining that the second device has not been revoked; otherwise, determining that the second device has been revoked. Furthermore, in a case where it is determined that the second device has not been revoked, the first device may continue to perform subsequent processing of authenticating the second device based on the public key associated with the second device and the second signature, and details are not repeated here.

In some possible implementations, the first device and the second device may also complete negotiation of a session key simultaneously during the authentication process.

In a case where the first device determines that the authentication of the second device is successful, the processing of the first device may further include: calculating the session key based on the security parameter of the second device and the security parameter of the first device, where the session key is used for communication between the first device and the second device.

It should also be noted that in a case where the second device successfully authenticates the first device, the processing of the second device may further include: calculating the session key based on the security parameter of the second device and the security parameter of the first device, where the session key is used for communication between the first device and the second device.

In some possible implementations, authentication may also be initiated by the first device (i.e., by the proxy device) to the second device (i.e., the authentication function entity).

The first device may determine whether it is necessary to initiate authentication of a plurality of target devices based on configuration information. The configuration information may include: one or more authentication times, identifiers of a plurality of devices to be authenticated corresponding to each authentication time in the one or more authentication times, and the like. The possible contents of the configuration information are not limited or exhaustively listed here, as long as the first device may initiate authentication of the plurality of target devices at a certain time, the configuration information is within the protection scope of the embodiment.

In an embodiment, the first message transmitted by the first device may also be used to trigger the processing of authenticating the plurality of target devices.

The first message may carry the group parameter and the identity information of a plurality of target devices. The descriptions of the group parameter and the identity information of the plurality of target devices, and the relevant descriptions of the group information stored in the first device are the same as those in the aforementioned embodiments and will not be repeated. In addition, in the embodiment, the first message may further carry the identifiers of the plurality of target devices.

The processing of the second device after receiving the first message may include: calculating the identity verification values of the plurality of target devices based on an identifier of and one or more parameter values corresponding to each target device in the plurality of target devices contained in the identity information of the plurality of target devices; and authenticating the plurality of target devices based on the identity verification values of the plurality of target devices and the group parameter. The processing related to the second device authenticating the plurality of target devices is the same as that in the aforementioned embodiments, and details are not repeated.

In an embodiment, certificate authentication is still required between the first device and the second device.

The first device may carry an address of a third certificate in the first message. The third certificate is a certificate of the first service node to which the first device belongs, and the third certificate is used to authenticate the identity of the first service node. That is, in addition to carrying the group parameter and the identity information of the plurality of target devices, the first message may further carry the address of the third certificate. The relevant description of the third certificate is the same as that in the aforementioned embodiments, and will not be repeated here.

Accordingly, after receiving the first message, the second device may authenticate the identity of the first service node based on the address of the third certificate. The processing of the second device authenticating the identity of the first service node is the same as that in the aforementioned embodiments, and will not be repeated.

In an embodiment, the processing of the second device further includes transmitting the address of the second certificate to the first device, where the second certificate is a certificate of the second device. In the processing of the first device, the method further includes: receiving the address of the second certificate from the second device, where the second certificate is a certificate of the second device.

Since the first device acts as an authentication initiator in the embodiment, a difference between the embodiment and the aforementioned implementation lies in that after successfully authenticating the identity of the first service node and successfully authenticating the plurality of target devices, the second device may carry the address of the second certificate in the second message transmitted by itself. The processing of the first device authenticating the identity of the second device based on the address of the second certificate is the same as that in the aforementioned embodiments, and details are not repeated.

In an embodiment, signature authentication is still required between the first device and the second device.

The difference from the aforementioned implementation lies in that the first device, acting as the authentication initiator, first carries the first signature for authenticating the first device in the first message transmitted by itself.

The difference from the aforementioned implementation lies in that in the implementation, the parameters used for calculating the first signature may include, in addition to at least one of the identifier of the first device or the security parameter of the first device, a second random number generated by the first device. This is since the first device initiates the authentication in the implementation, and the first random number generated by the second device cannot be obtained before the authentication is initiated. Alternatively, in the implementation, the parameters used for calculating the first signature may include, in addition to at least one of the identifier of the first device or the security parameter of the first device, at least one of a second random number generated by the first device or the identifier of the second device. This is since the first device initiates the authentication in the implementation, and the first random number generated by the second device cannot be obtained before the authentication is initiated. However, the first device needs to initiate authentication to the second device, and the identifier of the second device may have been stored locally in advance. Therefore, the parameters used for calculating the first signature may include the identifier of the second device.

Except that the parameters used for calculating the first signature may be different from that in the aforementioned embodiments, the specific method by which the first device calculates the first signature is the same as that in the aforementioned embodiments, and details are not repeated.

After the second device receives the first message carrying the first signature for authenticating the first device, the processing of the second device may further include: authenticating the first device based on the group parameter and the first signature. In the processing of the second device, the difference from the aforementioned embodiments only lies in that the contents of the composition of the parameters used for verifying the first signature have been described in detail in the foregoing embodiments may change. Since the parameters used for verifying the first signature should be the same as the parameters used for calculating the first signature, details are not repeated here. The remaining processing of the second device verifying the first signature (i.e., authenticating the first device based on the first signature) is the same as that in the aforementioned embodiments, and details are not repeated.

In a case where the second device successfully authenticates the first device, the second device may perform the following process: transmitting a second message to the first device, where the second message carries a second signature for authenticating the second device, and the second signature is calculated based on the private key of the second device. Accordingly, the processing of the first device may include: receiving the second message from the second device, where the second message carries the second signature for authenticating the second device; and authenticating the second device based on the public key associated with the second device and the second signature.

On the second device side, the calculation method of the second signature is the same as that in the aforementioned embodiments. In the embodiments, the parameters for calculating the second signature include, in addition to at least one of the identifier of the second device or the security parameter of the second device, at least one of the following: the identifier of the first device, the first random number or the second random number.

The difference from the aforementioned implementation lies in that the processing of the second device after receiving the first message further includes transmitting at least one of the following to the first device: the first random number, or the identifier of the second device. Specifically, in a case where the first device initiates authentication via the first message, at least one of the first random number or the identifier of the second device may be transmitted to the first device in the second message along with the second signature.

The specific processing method of calculating the second signature by the second device is the same as that in the aforementioned embodiments, the processing of authenticating the second device by the first device based on the second signature is also the same as that in the aforementioned embodiments, and details are not repeated.

In the implementation, the first device and the second device may further complete the negotiation of the session key during the authentication processing. The specific processing is the same as that in the aforementioned embodiments, and details are not repeated.

In combination with FIG. 5, taking an example where the first device is a proxy device and the second device is an authentication function entity, the above authentication method is exemplarily illustrated. The scenario depicted in FIG. 5 is as follows: any zero-power device is in an identity-based cryptograph (IBC) cryptographic system by default, and a proxy device is in a public key infrastructure (PKI) system by default (it is a light node in the two-layer architecture, and registration and credential verification are consistent with KGC). During bidirectional authentication between the authentication function entity and the plurality of zero-power devices (i.e., the plurality of target devices in the aforementioned embodiments), the plurality of zero-power devices fully entrust the proxy device to help them complete the authentication process. The proxy device and the plurality of zero-power devices with the proxy device as proxy are both in the IBC cryptographic system and belong to the same trust domain. The proxy device may be an ordinary zero-power device with computing capabilities. Therefore, the proxy device needs to provide the authentication function entity with a certificate of a KGC to which the proxy device belongs to prove the legitimacy of the identities of the proxy device and the zero-power device with the proxy device as proxy, and the authentication function entity needs to provide its own certificate to prove the legitimacy of its own identity. Assuming that the authentication function entity needs to communicate with the plurality of zero-power devices (e.g., the identifiers of the plurality of zero-power devices are *ID*₁,*ID*₃,*ID*₅), the plurality of zero-power devices entrust the proxy device (belonging to the same trust domain as the plurality of zero-power devices) to help it complete the identity authentication. A processing flow of an authentication method shown in FIG. 5 may include the following steps.

In step 501, an authentication function entity transmits location information (*add_{D}*) of a second certificate of the authentication function entity on a blockchain, a first random number (*N_{D}*), an identifier (*ID_{D}*) of the authentication function entity and identifiers (*ID*₁,*ID*₃,*ID*₅) of a plurality of target devices to be communicated to a proxy device in plaintext.

In this step, information transmitted by the authentication function entity to the proxy device may be carried by a third message in the aforementioned embodiments. Assuming the authentication function entity is expressed as D, the proxy device is expressed as A, and the information transmitted by the authentication function entity to the proxy device may be represented as: *D* → *A*:*add_{D}*,*ID_{D}*,*N_{D}*,*ID*₁,*ID*₃,*ID*₅*.*

In step 502, after receiving the information transmitted by the authentication function entity, the proxy device checks the second certificate on the blockchain and verifies whether the second certificate has been revoked. If the second certificate is found and the second certificate has not been revoked, identity authentication of the authentication function entity is determined to be successful, and then step 503 is performed. In addition, it may further include determining the identity authentication of the authentication function entity to be failed and ending the processing if the second certificate is not found and/or the second certificate has been revoked.

In step 503, the proxy device transmits, to the authentication function entity, an address (*add_{KGC}*) of a third certificate of a KGC (i.e., a first service node) to which the proxy device belongs on the blockchain, an identifier (*ID_{A}*) of the proxy device, a federated identity *Root* (i.e., a group parameter), a second random number (*N_{A}*), a session key *X_{A}·P* (i.e., a DH parameter of the proxy device) negotiated using a DH protocol, a first signature Sig_{Root}(H(N_{D},N_{A},ID_{D},ID_{A},X_{A}·P)), and a proof message (i.e., identity information) of a plurality of zero-power devices belonging to the federated identity *Root .*

The first signature may be obtained by performing calculation, using a private key corresponding to the federated identity *Root,* on the identifier (*ID_{A}*) of the proxy device, the second random number (*N_{A}*), the session key *X_{A}·P* negotiated using the DH protocol, the identifier (*ID_{D}*) of the authentication function entity and the first random number (*N_{D}*). Here, a purpose of signing the first random number (or referred to as a nonce value *N_{D}*) is to enable the authentication function entity to authenticate that what the authentication function entity has received is not a replay message but a message transmitted by the proxy device. Signing the identifier *ID_{D}* of the authentication function entity indicates that the proxy device has received the information transmitted by the authentication function entity in step 501.

In this step, the information transmitted by the proxy device to the authentication function entity may be carried by a first message in the aforementioned embodiments. In combination with FIG. 4, taking an example of the identifiers of the plurality of zero-power devices in the aforementioned embodiments as *ID*₁,*ID*₃,*ID*₅, the content carried by the first message may be expressed as follows:
*ID*_{1,}*N*₀,*N*₉,*N*₁₃
*ID*₃*,N*₂,*N*₈,*N*₁₃
*ID*₅,*N*₄,*N*₁₁,*N*₁₂,*Root*
*add_{KGC}*,*ID_{A}*,*N_{A}*,*X_{A}·P*,*Sig(H*(*N_{D}*,*N_{A}*,*ID_{D}*,*ID_{A}*,*X_{A}·P*)).

In step 504, after receiving the information transmitted by the proxy device, the authentication function entity checks the third certificate *Cert_{KGC}* on the blockchain, verifies whether the third certificate has been revoked, verifies an identity of each zero-power device, verifies whether the federated identity *Root* has been revoked on the blockchain, and verifies the first signature.

Specifically, in a case where the authentication function entity has found the third certificate *Cert_{KGC}* on the blockchain and the third certificate has not been revoked, the identity of each zero-power device is verified. In a case where authentication of each zero-power device is determined to be successful, it is verified on the blockchain whether the federated identity *Root* has been revoked. In a case where the federated identity *Root* is determined to have not been revoked, authenticity of the first signature is verified using *Root .* Furthermore, in a case where the first signature is verified to be passed, that is, the proxy device is successfully authenticated, step 505 may be performed. In addition, the method may further include the authentication function entity terminating the processing in a case where at least one of the following conditions is met: the third certificate *Cert_{KGC}* being not found in the blockchain, the third certificate being revoked, the federated identity *Root* being determined to be revoked, or the first signature being verified to be failed.

In step 505, the authentication function entity transmits the identifier *ID_{D}* of the authentication function entity, the session key *X_{D}·P* negotiated using the DH protocol and a second signature to the proxy device.

The second signature may be obtained by performing calculation, using a private key of the authentication function entity, on the identifier *ID_{D}* of the authentication function entity, the session key *X_{D}·P* negotiated using the DH protocol, the identifier ( *ID_{A}* ) of the proxy device and the second random number (*N_{A}*). Here, signing with *X_{D}·P* is to enable the authentication function entity and the proxy device to complete the negotiation of the session key. The purpose of signing the second random number (or referred to as a nonce value *N_{A}*) is to enable the proxy device to authenticate that what the proxy device has received is not a replay message but a message transmitted by the authentication function entity. Signing *ID_{A}* indicates that the authentication function entity has received the first message from the proxy device.

In this step, information transmitted by the authentication function entity to the proxy device may be carried by a second message in the aforementioned embodiments. Assuming the authentication function entity is expressed as D, the proxy device is expressed as A, and the information transmitted by the authentication function entity to the proxy device may be represented as: *D*→*A*:*ID_{D}*,*X_{D}·P*,*Sig*(*H*(*ID_{D}*,*ID_{A}*,*N_{A}*,*X_{D}·P*)).

In step 506, after receiving the information transmitted by the authentication function entity, the proxy device verifies whether the identity of the authentication function entity has been revoked. If the identity of the authentication function entity has not been revoked, the second signature is verified using a public key in the second certificate of the authentication function entity.

In step 507, the proxy device begins communication with the authentication function entity in a case of completing the authentication of the authentication function entity.

The example in FIG. 5 is for a scenario where authentication is initiated by the authentication function entity. For a scenario where authentication is initiated by the proxy device, the specific steps in FIG. 5 may be adaptively replaced or adjusted. For example, step 501 and step 502 may be deleted (i.e., step 501 and step 502 are not performed). In step 503, the proxy device transmits, to the authentication function entity, the address (*add_{KGC}*) of the third certificate of the KGC (i.e., the first service node) to which the proxy device belongs on the blockchain, the identifier (*ID_{A}*) of the proxy device, the federated identity *Root* (i.e., the group parameter), the second random number (*N_{A}*), the session key *X_{A}*·*P* (i.e., the DH parameter of the proxy device) negotiated using the DH protocol, the identifiers of the plurality of zero-power devices, the first signature Sig_{Root}(H(N_{A},ID_{D},ID_{A},X_{A}·P)), and the proof message (i.e., the identity information) of the plurality of zero-power devices belonging to the federated identity *Root.* Step 504 remains unchanged. In step 505, the authentication function entity transmits, to the proxy device, the identifier *ID_{D}* of the authentication function entity, the session key *X_{D}*·*P* negotiated using the DH protocol, the location information (*add_{D}*) of the second certificate of the authentication function entity on the blockchain, the first random number (*N_{D}*) and the second signature *Sig*(*H*(*ID_{D}*,*ID_{A}*,*N_{D}*,*N_{A}*,*X_{D}*·*P*)). In step 506, after receiving the information transmitted by the authentication function entity, the proxy device checks the second certificate on the blockchain and verifies whether the second certificate has been revoked. If the second certificate is found and the second certificate has not been revoked, identity authentication of the authentication function entity is determined to be successful. Then, the proxy device verifies whether the identity of the authentication function entity has been revoked. If the identity of the authentication function entity has not been revoked, the second signature is verified using a public key in the second certificate of the authentication function entity. Step 507 remains unchanged.

In some possible implementations, the second device may have one of the following types: a terminal, an Internet of Things (IoT) device, or a zero-power device.

In the implementations, the second device and the target device may be of the same type. For example, the second device may be an IoT device, and the plurality of target devices may be a plurality of IoT devices that are different from the second device. Alternatively, the second device and the target device may be of different types. For example, the second device may be an IoT device, and the plurality of target devices may be a plurality of zero-power devices. As another example, the second device may be a terminal, and the plurality of target devices may be a plurality of zero-power devices (or a plurality of IoT devices). All possible types of the second device and the target device are not exhaustively listed or limited here.

In this case, there may be two possible scenarios: one is that the second device (e.g., an IoT device or a zero-power device) and the plurality of target devices belong to different trust domains; and the other is that the second device (e.g., an IoT device or a zero-power device) and the plurality of target devices belong to the same trust domain. The two scenarios will be described respectively below.

In some embodiments, the second device (e.g., an IoT device or a zero-power device) and the plurality of target devices belong to different trust domains, and the plurality of target devices and the first device belong to the same trust domain. In the embodiments, the plurality of target devices and the first device belonging to the same trust domain may mean that the plurality of target devices and the first device belong to the same service node, which is a first service node. The second device and the plurality of target devices belonging to different trust domains may mean that the second device and the first device (and the plurality of target devices) belong to different trust domains, a service node to which the second device belongs may be a second service node, and the second service node is different from the first service node.

In the embodiments, the second device is still a device that initiates authentication. The second device may transmit a third message to the first device when the second device needs to communicate with the plurality of target devices which belong to different trust domains as the second device. The method for selecting the plurality of target devices by the second device is the same as that in the aforementioned embodiments and will not be repeated here.

In an embodiment, the third message carries at least the identifiers of the plurality of target devices. Accordingly, after receiving the third message transmitted by the second device, the first device obtains the group parameter corresponding to the group to which the plurality of target devices belong, and obtains the identity information of the plurality of target devices based on an identifier of each target device in the plurality of target devices; and transmits a first message to the second device, where the first message carries the group parameter and the identity information of the plurality of target devices.

The identity information of the plurality of target devices includes the identifier of each target device in the plurality of target devices and one or more parameter values corresponding to each target device, where the one or more parameter values corresponding to each target device are determined based on group information. The relevant explanations regarding the group information, the group parameter, and the method by which the first device obtains the identity information are the same as those in the aforementioned implementations, and will not be repeated.

In some embodiments, the first message may carry the group parameter and the identity information of the plurality of target devices. Accordingly, the processing of the second device after receiving the first message may include: calculating the identity verification values of the plurality of target devices based on an identifier of and one or more parameter values corresponding to each target device in the plurality of target devices contained in the identity information of the plurality of target devices; and authenticating the plurality of target devices based on the identity verification values of the plurality of target devices and the group parameter.

For the second device, the processing of calculating the identity verification values of the plurality of target devices based on an identifier of and one or more parameter values corresponding to each target device in the plurality of target devices contained in the identity information of the plurality of target devices, and authenticating the plurality of target devices based on the identity verification values of the plurality of target devices and the group parameter is the same as that in the aforementioned implementations, and will not be repeated.

Optionally, the second device has an on-chain capability. After receiving the first message, the second device may further include: the second device extracting the group parameter from the first message; and the second device checking on the blockchain whether the group parameter has been revoked. The processing of the second device checking on the blockchain whether the group parameter has been revoked is the same as that in the previous implementations and will not be repeated.

Optionally, the second device does not have an on-chain capability. After receiving the first message, the second device may further include: the second device extracting the group parameter from the first message; and the second device transmitting the group parameter to a third device. Accordingly, the processing of the third device may include: receiving the group parameter from the second device and checking on the blockchain whether the group parameter has been revoked.

The third device may be a proxy device corresponding to the second device. The type of the third device may be a terminal or an access network device. The third device may be the same as or different from the first device, which is not limited in the embodiments. The processing of the third device checking on the blockchain whether the group parameter has been revoked is similar to that in the aforementioned implementations and will not be repeated.

Through the above processing, it may be achieved that the second device, i.e., any IoT device or zero-power device, initiates authentication of a plurality of target devices in a different trust domain as the second device, and then the first device acts as a proxy to generate the identity information of each target device and reports the identity information to the second device, then the second device completes the processing of the authentication of the plurality of target devices based on the identity information of each target device. Thus, it may improve the efficiency of authenticating a group of target devices for the zero-power device in a cross-domain scenario.

In some possible implementations, certificate-related authentication may also be added between the first device and the second device.

The processing of the second device further includes: transmitting an address of a first certificate to the first device, where the first certificate is a certificate of a second service node to which the second device belongs. The processing of the first device may further include: receiving the address of the first certificate from the second device, where the first certificate is the certificate of the second service node to which the second device belongs.

Since the authentication is initiated by the second device in the implementations, the address of the first certificate may be carried in the third message, that is, the third message further carries the address of the first certificate. The first certificate is stored on the blockchain. Therefore, the address of the first certificate specifically refers to an address of the first certificate on the blockchain, or location information of the first certificate on the blockchain. In other words, when the second device initiates the authentication processing, the second device (i.e., any IoT device or zero-power device) transmits the third message carrying the address of the first certificate of the second service node to which the second device belongs and the identifier of each target device in the plurality of target devices to the first device.

The address of the first certificate may be obtained when the second device is registered. Taking the second device as an IoT device as an example, the registration processing of the IoT device may include that: the IoT device transmits an identity verification material to a service node (which may be the second service node or the second KGC in the embodiments) to which the IoT device belongs, where the identity verification material includes at least the identifier of the IoT device, and the identifier may include at least one of a factory unique identifier, an identifier issued by the operator or an identifier issued by the service provider; after receiving the identity verification material submitted by the IoT device, the service node conducts a review; if the review is passed, the service node uses its own master private key s to generate a private key (e.g., expressed as sk_{A}) corresponding to the identity (i.e., identifier) of the IoT device using a key generation algorithm; and then the service node transmits the private key (sk_{A}) corresponding to the IoT device and the address of the certificate of the service node on the blockchain to the IoT device. Thus, the IoT device is successfully registered. That is, the IoT device may, by registering, obtain its own private key and the address of the certificate of the service node to which the IoT device belongs.

Accordingly, the processing of the first device may further include: authenticating the identity of the second service node based on the address of the first certificate.

Specifically, authenticating the identity of the second service node based on the address of the first certificate may include: the first device checking the first certificate on the blockchain based on the location information (or the address) of the first certificate on the blockchain; and determining the identity authentication of the second service node to be successful in a case where the first certificate is found and it is determined that the first certificate has not been revoked. In addition, authenticating the identity of the second service node based on the address of the first certificate may further include: determining the identity authentication of the second service node to be failed in a case where the first certificate is not found and/or it is determined that the first certificate has been revoked.

Here, in the processing of the first device, the method further includes: receiving auxiliary information related to the first certificate from the second device. The auxiliary information related to the first certificate may also be carried in the third message. That is, the third message may further carry the auxiliary information related to the first certificate. A method of determining whether the first certificate has been revoked may include: the first device verifying whether the first certificate has been revoked based on the auxiliary information related to the first certificate and a product of all revoked revocation factors maintained by a certificate issuing node corresponding to the second service node, so as to obtain a result of whether the first certificate has been revoked.

In the implementations, the processing of the first device transmitting a first message to the second device may be that the first device transmits the first message to the second device in a case of determining that the identity authentication of the second service node is successful based on the address of the first certificate.

The first message may further carry an address of a third certificate, the third certificate is a certificate of a first service node to which the first device belongs, and the third certificate is used to authenticate the identity of the first service node. That is, in addition to carrying the group parameter and the identity information of the plurality of target devices, the first message may further carry the address of the third certificate.

The third certificate is stored on the blockchain. Therefore, the address of the third certificate specifically refers to an address of the third certificate on the blockchain, or location information of the third certificate on the blockchain. The address of the third certificate may be obtained when the first device is registered. The registration processing of the first device is the same as that in the aforementioned embodiments and will not be repeated.

In an embodiment, the second device has an on-chain capability. The processing of the second device after receiving the address of the third certificate may further include: authenticating the identity of the first service node based on the address of the third certificate. In the embodiment, the description of the second device authenticating the identity of the first service node based on the address of the third certificate is the same as that in the aforementioned embodiments, and details are not repeated.

In an embodiment, the second device does not have an on-chain capability. The processing of the second device after receiving the address of the third certificate may further include: the second device transmitting the address of the third certificate to the third device and receiving an identity authentication result of the first service node transmitted by the third device. Accordingly, the processing of the third device may include: receiving the address of the third certificate from the second device; authenticating the identity of the first service node based on the address of the third certificate; and transmitting the identity authentication result of the first service node to the second device. Here, the processing of the third device authenticating the identity of the first service node based on the address of the third certificate is similar to the relevant description in the aforementioned embodiments, except that it is performed by the third device, and details are not repeated.

Through the above processing, it may be achieved that the second device (any IoT device or zero-power device) initiates authentication, and then the first device acts as a proxy to generate the identity information of each target device and reports the identity information to the second device, then the second device completes the processing of the authentication of the plurality of target devices based on the identity information of each target device. In the above authentication process, the identity authenticate performed by the first device on the second service node through the address of the first certificate of the second service node to which the second device belongs, and the identity authenticate performed by the second device on the first service node through the address of the third certificate of the first service node to which the first device belongs are added. This may improve the efficiency of authenticating at least part of the devices in a group, and ensure the identity authentication for multi-party devices and guarantee the accuracy of the authentication.

In some possible implementations, signature-related authentication may also be added between the first device and the second device (any IoT device or zero-power device), and negotiation of a session key may be completed simultaneously.

In the implementations, the first message further carries a first signature for authenticating the first device. The calculation method of the first signature is the same as that in the aforementioned embodiments.

The parameters used for calculating the first signature may include at least one of the following: the identifier of the first device or the security parameter of the first device.

In an embodiment, the first message may further carry at least one of the following: the identifier of the first device or the security parameter of the first device. That is, in addition to carrying the first signature, the first message may further carry at least one of the identifier of the first device or the security parameter of the first device. The content carried in the first message may be completely or partially related to the parameter(s) used for calculating the first signature. The relevant description is the same as that in the aforementioned embodiments, and details are not repeated. The descriptions of the security parameter of the first device and the private key corresponding to the group parameter are the same as those in the aforementioned embodiments, and details are not repeated.

In an embodiment, the processing of the first device may further include receiving, from the second device, at least one of the following: the first random number or the identifier of the second device. In a case where the second device initiates authentication via the third message, at least one of the first random number or the identifier of the second device may be carried by the third message. That is, the third message further carries at least one of the following: the first random number or the identifier of the second device. The first random number mentioned above may be generated before the second device transmits the third message. The method by which the second device generates the first random number is not limited in the embodiment. In the embodiment, in addition to the identifier of the first device and/or the security parameter of the first device, the parameters used for calculating the first signature may further include at least one of the following: the identifier of the second device or the first random number.

In an embodiment, the first message may further carry a second random number. The second random number may be generated by the first device before calculating the first signature or transmitting the first message. The method by which the first device generates the second random number is not limited in the embodiment. In the embodiment, in addition to the identifier of the first device and/or the security parameter of the first device, the parameters used for calculating the first signature may further include the second random number. Alternatively, in addition to the identifier of the first device and/or the security parameter of the first device, the parameters used for calculating the first signature may further include at least one of the following: the identifier of the second device, the first random number or the second random number.

The relevant description of the calculation of the first signature by the first device is the same as various possible exemplary explanations provided in the foregoing embodiments, and will not be repeated here.

After the second device receives the first message carrying the first signature for authenticating the first device, the processing of the second device may further include: authenticating the first device based on the group parameter and the first signature. The execution timing and specific processing method of the second device authenticating the first device based on the group parameter and the first signature are the same as those in the aforementioned embodiments, and details are not repeated.

In some possible implementations, in a case where the second device successfully authenticates the first device, the processing of the second device may further include: transmitting a second message to the first device, where the second message carries a second signature for authenticating the second device, and the second signature is calculated based on the private key of the second device.

In an embodiment, the parameters for calculating the second signature may include at least one of the following: the identifier of the second device or the security parameter of the second device. In the embodiment, the second message further carries at least one of the following: the identifier of the second device or the security parameter of the second device. The relevant descriptions of the second message and the parameters for calculating the second signature are the same as those in the aforementioned embodiments and will not be repeated.

Here, the private key of the second device may be pre-configured, that is, the private key of the second device may be stored in the second device in advance. The private key of the second device may be obtained when the second device is registered. The registration process of the second device has been described in detail in the foregoing embodiments and will not be repeated.

In an embodiment, the parameters for calculating the second signature may include, in addition to at least one of the security parameter of the second device or the identifier of the second device, at least one of the following: the identifier of the first device, the first random number or the second random number. The identifier of the first device and the second random number may be carried in the first message transmitted by the first device; and the first random number is generated by the second device and transmitted to the first device.

The relevant descriptions of various possible examples of the second device calculating the second signature are the same as those in the aforementioned implementations, and details are not repeated.

In some possible implementations, the processing of the first device may include: receiving a second message from the second device, where the second message carries a second signature for authenticating the second device; and authenticating the second device based on the public key associated with the second device and the second signature.

Optionally, the second device may implicitly indicate to the first device that the authentication result for the first device is authentication successful by carrying the second signature for authenticating the second device in the second message. That is, when the first device receives the second message carrying the second signature used for authenticating the second device, the first device may determine that the authentication result of the second device for the first device is authentication successful.

Optionally, the second device may indicate to the first device that the authentication result for the first device is authentication successful by indicating in the second message that the authentication result for the first device is authentication successful.

In addition, in a case where the second device fails to authenticate the first device, the processing of the second device may include: transmitting a group response message to the first device, where the group response message carries an indication of the authentication result for the first device is authentication failed. Accordingly, the processing of the first device may include: receiving a group response message from the second device. Furthermore, the processing of the first device may further include: terminating the processing in a case where the group response message indicates that the authentication result for the first device is authentication failed.

Specifically, the processing of authenticating the second device based on the public key associated with the second device and the second signature is the same as that in the aforementioned embodiments, and details are not repeated here. The parameters for verifying the second signature by the first device are also the same as that in the aforementioned embodiments, and details are not repeated here.

Here, the public key associated with the second device includes a public key of the second device, and the public key of the second device is the identifier of the second device. That is, the public key associated with the second device may include the identifier of the second device. Furthermore, the public key associated with the second device may further include a master public key of the second service node, and the master public key of the second service node is stored in the first certificate.

Specifically, the public key associated with the second device refers to a public key used for verifying the second signature. The public key used for verifying the second signature need include the public key of the second device (i.e., the public key of the second device itself), which is specifically the identifier of the second device. Moreover, the public key used for verifying the second signature need further include a master public key of the second service node to which the second device belongs.

In the foregoing embodiments, it has been described that the first device may obtain the address of the first certificate and authenticate the identity of the second service node. Therefore, the processing of the first device obtaining the public key associated with the second device may include: in a case where the identity of the second service node is successfully authenticated, obtaining the master public key of the second service node from the first certificate; using the identifier of the second device as the public key of the second device; and using the public key of the second device and the master public key of the second service node together as the public key associated with the second device. Regarding the specific method of using the public key of the second device and the master public key of the second service node together as the public key associated with the second device, it may be that the public key of the second device and the master public key of the second service node are directly concatenated as the public key associated with the second device, or it may be of other methods, which is not exhaustively listed or limited in the embodiments.

In an embodiment, the second message further carries at least one of the following: the identifier of the second device or the security parameter of the second device. The first device may determine the parameters for verifying the second signature based on the second message, and the parameters for verifying the second signature may be completely or partially related to the second message. The description of the first device determining the parameters for verifying the second signature is the same as that in the aforementioned embodiments, and details are not repeated here.

In an embodiment, the parameters for verifying the second signature may include, in addition to at least one of the security parameter of the second device or the identifier of the second device, at least one of the following: the identifier of the first device or the second random number. The identifier of the first device and the second random number may be carried in the first message transmitted by the first device. Therefore, both the first device and the second device may obtain the identifier of the first device and the second random number.

In an embodiment, the first device decrypts the second signature using a signature verification algorithm and based on the public key associated with the second device to obtain second decryption information, and authenticates the second device based on the second decryption information and the parameters for verifying the second signature. The processing of authenticating the second device based on the second decryption information and second parameters is the same as that in the aforementioned embodiments, and details are not repeated.

Optionally, in a case where the first device determines that the authentication of the second device is failed, the processing of the first device may further include: the first device ending the processing, or the first device transmitting an indication to the second device that the authentication of the second device is failed.

Optionally, in a case where the first device determines that the authentication of the second device is successful, the processing of the first device may further include: the first device transmitting an indication to the second device that the authentication of the second device is successful.

In an embodiment, before authenticating the second device based on the public key associated with the second device and the second signature, the processing of the first device may further include: verifying whether the second device has been revoked based on the identifier of the second device carried in the second message.

Here, since the number of the IoT devices in the same trust domain is relatively small, the identity of the IoT device (i.e., the second device) is revoked using the traditional revocation list. For example, the second service node (e.g., a second KGC) to which the second device belongs needs to maintain a revocation list, which records the identity and other information of the revoked device, so as to prevent the revoked identity from being illegally used. When the second service node (e.g., the second KGC) receives an identity revocation request, the second service adds the identity and other information of the IoT device to the revocation list and uploads the updated revocation list to the blockchain for other users to verify. Accordingly, the first device verifies whether the second device has been revoked based on the identifier of the second device carried in the second message, which may mean that the first device searches for the revocation list on the blockchain, obtains a state of the identifier of the second device from the revocation list, and determines that the second device has not been revoked in a case where the state corresponding to the identifier of the second device is not revoked, otherwise, determines that the second device has been revoked. Furthermore, in a case where it is determined that the second device has not been revoked, the first device may continue to perform subsequent processing of authenticating the second device based on the public key associated with the second device and the second signature, and details are not repeated here.

In the aforementioned authentication process, the first device and the second device may also complete negotiation of the session key. The processing of the first device may further include: calculating the session key based on the security parameter of the second device and the security parameter of the first device, where the session key is used for communication between the first device and the second device. It should also be noted that in a case where the second device successfully authenticates the first device, the processing of the second device may further include: calculating the session key based on the security parameter of the second device and the security parameter of the first device, where the session key is used for communication between the first device and the second device.

In some possible implementations, the second device and the plurality of target devices belong to different trust domains, and the plurality of target devices and the first device belong to the same trust domain. Authentication may also be initiated from the first device (i.e., a proxy device) to the second device (e.g., an IoT device).

In an embodiment, the first message transmitted by the first device may also be used to trigger the processing of authenticating the plurality of target devices.

The first message may carry the group parameter and the identity information. The relevant descriptions of the group parameter, the identity information, and the group information stored in the first device are the same as those in the aforementioned embodiments, and details are not repeated. In addition, the first message may further carry the identifiers of the plurality of target devices.

The processing of the second device after receiving the first message may include: calculating the identity verification values of the plurality of target devices based on an identifier of and one or more parameter values corresponding to each target device in the plurality of target devices contained in the identity information, and authenticating the plurality of target devices based on the identity verification values of the plurality of target devices and the group parameter. The processing related to the second device authenticating the plurality of target devices is the same as that in the aforementioned embodiments, and details are not repeated.

In an embodiment, certificate authentication is still required between the first device and the second device.

The first device may carry an address of a third certificate in the first message. The third certificate is a certificate of the first service node to which the first device belongs, and the third certificate is used to authenticate the identity of the first service node. The relevant description of the third certificate is the same as that in the aforementioned embodiments, and will not be repeated here. Accordingly, after receiving the first message, the second device may authenticate the identity of the first service node based on the address of the third certificate. The processing of the second device authenticating the identity of the first service node is the same as that in the aforementioned embodiments, and will not be repeated.

In an embodiment, the processing of the second device further includes transmitting the address of the second certificate to the first device, where the second certificate is a certificate of the second device. In the processing of the first device, the method further includes: receiving the address of the second certificate from the second device, where the second certificate is a certificate of the second device.

Since the first device acts as an authentication initiator in the embodiment, a difference between the embodiment and the aforementioned implementation lies in that after successfully authenticating the identity of the first service node and successfully authenticating the plurality of target devices, the processing of the second device further includes: transmitting an address of a first certificate to the first device, where the first certificate is a certificate of a second service node to which the second device belongs. The second device may carry the address of the second certificate in the second message transmitted by the second device. The processing of the first device authenticating the identity of the second device based on the address of the second certificate is the same as that in the aforementioned embodiments, and details are not repeated.

In an embodiment, signature authentication is still required between the first device and the second device.

The difference from the aforementioned implementation lies in that the first device, acting as the authentication initiator, first carries the first signature for authenticating the first device in the first message transmitted by itself.

A method by which the first device calculates the first signature may be that: the first device calculates the first signature using a signature algorithm and based on the private key corresponding to the group parameter and the parameters used for calculating the first signature. The parameters used for calculating the first signature include at least one of the following: the identifier of the first device or the security parameter of the first device. The difference from the aforementioned implementation lies in that in the implementation, the parameters used for calculating the first signature may include, in addition to at least one of the identifier of the first device or the security parameter of the first device, a second random number generated by the first device. This is since the first device initiates the authentication in the implementation, and the first random number generated by the second device cannot be obtained before the authentication is initiated. Alternatively, in the implementation, the parameters used for calculating the first signature may include, in addition to at least one of the identifier of the first device or the security parameter of the first device, at least one of a second random number generated by the first device or the identifier of the second device. This is since the first device initiates the authentication in the implementation, and the first random number generated by the second device cannot be obtained before the authentication is initiated. However, the first device needs to initiate authentication to the second device, and the identifier of the second device may have been stored locally in advance. Therefore, the parameters used for calculating the first signature may include the identifier of the second device.

Except that the parameters used for calculating the first signature may be different from that in the aforementioned embodiments, the specific method by which the first device calculates the first signature is the same as that in the aforementioned embodiments, and details are not repeated.

After the second device receives the first message carrying the first signature for authenticating the first device, the processing of the second device may further include: authenticating the first device based on the group parameter and the first signature. In the processing of the second device, the difference from the aforementioned embodiments only lies in that the contents of the composition of the parameters used for verifying the first signature have been described in detail in the foregoing embodiments may change. However, the parameters used for verifying the first signature are the same as the parameters used by the first device for calculating the first signature. The remaining processing is the same as that in the aforementioned embodiments, and details are not repeated.

In a case where the second device successfully authenticates the first device, the second device may perform the following process: transmitting a second message to the first device, where the second message carries a second signature for authenticating the second device, and the second signature is calculated based on the private key of the second device. Accordingly, the processing of the first device may include: receiving the second message from the second device, where the second message carries the second signature for authenticating the second device; and authenticating the second device based on the public key associated with the second device and the second signature. The difference from the aforementioned implementation lies in that the processing of the second device after receiving the first message further includes transmitting at least one of the following to the first device: the first random number, or the identifier of the second device. Specifically, in a case where the first device initiates authentication via the first message, at least one of the first random number or the identifier of the second device may be transmitted to the first device in the second message along with the second signature.

The specific processing method of calculating the second signature by the second device is the same as that in the aforementioned embodiments, the processing of authenticating the second device by the first device based on the second signature is also the same as that in the aforementioned embodiments, and details are not repeated.

In the implementation, before (or after) authenticating the second device based on the second signature, the first device may also verify whether the second device has been revoked. The specific processing method is the same as that in the previous embodiments, and details are not repeated.

In the implementation, the first device and the second device may further complete the negotiation of the session key during the authentication processing. The specific processing is the same as that in the aforementioned embodiments, and details are not repeated.

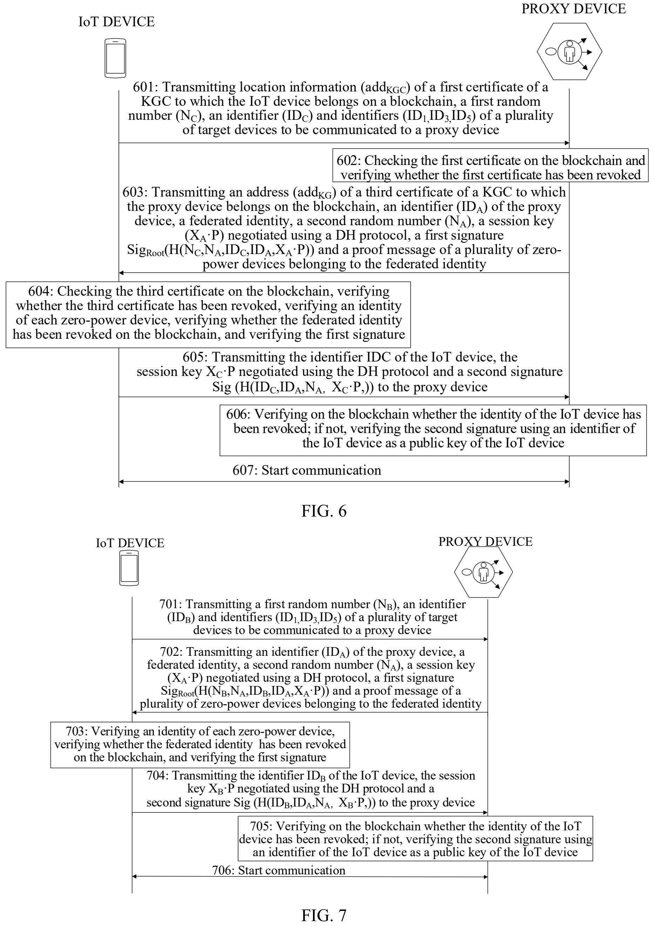

In combination with FIG. 6, taking an example where the first device is a proxy device and the second device is an IoT device, the above authentication method is exemplarily illustrated. The scenario depicted in FIG. 6 is as follows: if the zero-power device (or the IoT device) needs to communicate with the plurality of IoT devices or the plurality of zero-power devices (i.e., the plurality of target devices in the aforementioned embodiments) which are in a different trust domain from the zero-power device (or the IoT device), that is, the zero-power device (or the IoT device) needs to provide identity verification to the IoT devices in the different trust domain from the zero-power device (or the IoT device) and verify the identity of the IoT devices, the zero-power device (or the IoT device) may entrust a proxy device to assisting in completing inter-domain authentication. Assuming that an IoT device C needs to communicate with a plurality of zero-power devices (identified as *ID*₁,*ID*₃,*ID*₅), the plurality of zero-power devices entrust an proxy device (belonging to the same trust domain as the plurality of zero-power devices) to assisting in completing the identity authentication, where, the IoT device C and the plurality of zero-power devices belong to different trust domains. A processing flow of an authentication method shown in FIG. 6 may include the following steps.

In step 601, an IoT device transmits location information of a first certificate of a KGC (i.e., a second service node in the aforementioned embodiments) to which the IoT device belongs on a blockchain, a first random number *N_{C}*, an identifier *ID_{C}* of the IoT device and identifiers (*ID*₁*,ID*₃,*ID*₅) of a plurality of target devices to be communicated to a proxy device in plaintext.

In this step, information transmitted by the IoT device to the proxy device may be carried by a third message in the aforementioned embodiments. Assuming the IoT device is expressed as C, the proxy device is expressed as A, and the information transmitted by the authentication function entity to the proxy device may be represented as: *C* → *A*: *add*_{KGC},*ID_{C}*,*N_{C},ID*₁*,ID*₃,*ID*₅*.*

In step 602, after receiving the information transmitted by the IoT device, the proxy device checks the first certificate on the blockchain and verifies whether the first certificate has been revoked. If the first certificate is found and the first certificate has not been revoked, identity authentication of the second service node is determined to be successful, and then step 603 is performed. In addition, it may further include determining the identity authentication of the second service node to be failed and ending the processing if the first certificate is not found and/or the first certificate has been revoked.

In step 603, the proxy device transmits, to the IoT device, an address (*add_{KGC}*) of a third certificate of a KGC (i.e., a first service node) to which the proxy device belongs on the blockchain, an identifier (*ID_{A}*) of the proxy device, a federated identity *Root* (i.e., a group parameter), a second random number (*N_{A}*), a session key *X_{A} · P* (i.e., a DH parameter of the proxy device) negotiated using a DH protocol, a first signature Sig_{Root}(H(N_{C},N_{A},ID_{C},ID_{A},X_{A}·P)), and a proof message (i.e., identity information) of a plurality of zero-power devices belonging to the federated identity *Root.*

The first signature may be obtained by performing calculation, using a private key corresponding to the federated identity *Root*, on the identifier (*ID_{A}*) of the proxy device, the second random number (*N_{A}*), the session key *X_{A}* · *P* negotiated using the DH protocol, the identifier (*ID_{C}*) of the IoT device and the first random number (*N_{C}*). Here, a purpose of signing the first random number (or referred to as a nonce value *N_{C}*) is to enable the IoT device to authenticate that what the IoT device has received is not a replay message but a message transmitted by the proxy device. Signing the identifier *ID_{C}* of the IoT device indicates that the proxy device has received the information transmitted by the authentication function entity in step 601.

In this step, the information transmitted by the proxy device to the IoT device may be carried by a first message in the aforementioned embodiments. In combination with FIG. 4, taking an example of the identifiers of the plurality of zero-power devices in the aforementioned embodiments as *ID*₁,*ID*₃,*ID*₅, the content carried by the first message may be expressed as follows:
*ID*₁,*N*₀,*N*₉,*N*₁₃
*ID*₃,*N*₂,*N₈*,*N*₁₃
*ID₅*,*N*₄,*N*₁₁,*N*₁₂,*Root*
*add*_{KGC},*ID_{A}*,*N_{A},X_{A} · P,Sig*(*H*(*N_{C},N_{A},ID_{C,}ID_{A},X_{A} · P*))

In step 604, after receiving the information transmitted by the proxy device, the IoT device checks the third certificate *Cert_{KGC}* on the blockchain, verifies whether the third certificate has been revoked, verifies an identity of each zero-power device, verifies whether the federated identity *Root* has been revoked on the blockchain, and verifies the first signature.

Specifically, in a case where the IoT device has found the third certificate *Cert_{KGC}* on the blockchain and the third certificate has not been revoked, the identity of each zero-power device is verified. In a case where authentication of each zero-power device is determined to be successful, it is verified on the blockchain whether the federated identity *Root* has been revoked. In a case where the federated identity *Root* is determined to have not been revoked, authenticity of the first signature is verified using *Root .* Furthermore, in a case where the first signature is verified to be passed, that is, the proxy device is successfully authenticated, step 605 may be performed. In addition, the method may further include the IoT device terminating the processing in a case where at least one of the following conditions is met: the third certificate *Cert_{KGC}* being not found in the blockchain, the third certificate being revoked, the federated identity *Root* being determined to be revoked, or the first signature being verified to be failed.

It should also be noted that if the IoT device does not have an on-chain capability, the IoT device may also entrust a proxy device corresponding to the IoT device to check the third certificate *Cert_{KGC}* on the blockchain, and verify whether the federated identity *Root* has been revoked on the blockchain.

In step 605, the IoT device transmits the identifier *ID_{C}* of the IoT device, the session key *X_{C} · P* negotiated using the DH protocol and a second signature to the proxy device.

The second signature may be obtained by performing calculation, using a private key of the IoT device, on the identifier *ID_{C}* of the IoT device, the session key *X_{C}* · *P* negotiated using the DH protocol, the identifier (*ID_{A}*) of the proxy device and the second random number (*N_{A}*)*.* Here, signing with *X_{C} · P* is to enable the IoT device and the proxy device to complete the negotiation of the session key. The purpose of signing the second random number (or referred to as a nonce value *N_{A}*) is to enable the proxy device to authenticate that what the proxy device has received is not a replay message but a message transmitted by the IoT device. Signing *ID_{A}* indicates that the IoT device has received the first message from the proxy device.

In this step, information transmitted by the IoT device to the proxy device may be carried by a second message in the aforementioned embodiments. Assuming the IoT device is expressed as C, the proxy device is expressed as A, and the information transmitted by the IoT device to the proxy device may be represented as: *C* → *A* : *ID_{C},X_{C} · P, Sig(H(ID_{C},ID_{A},N_{A},X_{C} · P*))*.*

In step 606, after receiving the information transmitted by the IoT device, the proxy device verifies on the blockchain whether the identity of the IoT device has been revoked. If the identity of the IoT device has not been revoked, the second signature is verified using an identifier of the IoT device as a public key of the IoT device. Here, in the processing of verifying the second signature, in addition to using the identifier of the IoT device as the public key of the IoT device, a master public key of the second service node may also be extracted from the first certificate, and the second signature may be verified using the public key of the IoT device and the master public key of the second service node.

In step 607, the proxy device begins communication with the IoT device in a case of completing the authentication of the IoT device.

The example in FIG. 6 is for a scenario where authentication is initiated by the IoT device. For a scenario where authentication is initiated by the proxy device, the specific steps in FIG. 6 may be adaptively replaced or adjusted. For example, step 601 and step 602 may be deleted (i.e., step 601 and step 602 are not performed). In step 603, the proxy device transmits, to the IoT device, the address (*add_{KGC}*) of the third certificate of the KGC (i.e., the first service node) to which the proxy device belongs on the blockchain, the identifier (*ID_{A}*) of the proxy device, the federated identity *Root* (i.e., the group parameter), the second random number (*N_{A}*), the session key *X_{A}* · *P* (i.e., the DH parameter of the proxy device) negotiated using the DH protocol, the identifiers of the plurality of zero-power devices, the first signature Sig_{Root}(H(N_{A},ID_{A},X_{A}·P)), and the proof message (i.e., the identity information) of the plurality of zero-power devices belonging to the federated identity *Root .* Step 604 remains unchanged. In step 605, the IoT device transmits, to the proxy device, the identifier *ID*_{C} of the IoT device, the session key *X_{C} · P* negotiated using the DH protocol, the location information (*add*_{KGC}) of the first certificate of the KGC (i.e., the second service node in the aforementioned embodiments) to which the IoT device belongs on the blockchain, the first random number (*N_{C}*) and the second signature *Sig*(*H(ID_{C}*,*ID_{A},N_{C},N_{A},X_{C}·P*)). In step 606, the proxy device checks the first certificate on the blockchain and verifies whether the first certificate has been revoked. If the first certificate is found and the first certificate has not been revoked, identity authentication of the second service node is determined to be successful. Then, the proxy device verifies on the blockchain whether the identity of the IoT device has been revoked. If the identity of the IoT device has not been revoked, the second signature is verified using the identifier of the IoT device as the public key of the IoT device. Step 607 remains unchanged.

In some embodiments, the second device and the plurality of target devices belong to the same trust domain, and the plurality of target devices and the first device belong to the same trust domain. In the embodiments, the plurality of target devices and the first device belonging to the same trust domain may mean that the plurality of target devices and the first device belong to the same service node, which is a first service node. The second device and the plurality of target devices belonging to the same trust domain may mean that the second device and the first device (and the plurality of target devices) belong to the same trust domain, and the second device and the first device belong to the same service node, which is a first service node.

In the embodiments, the second device is still a device that initiates authentication. The second device may transmit a third message to the first device when the second device needs to communicate with the plurality of target devices which belong to the same trust domain as the second device. The method for selecting the plurality of target devices by the second device is the same as that in the aforementioned embodiments and will not be repeated here.

In an embodiment, the third message carries at least the identifiers of the plurality of target devices. Accordingly, after receiving the third message transmitted by the second device, the first device obtains the group parameter corresponding to the group to which the plurality of target devices belong, and obtains the identity information of the plurality of target devices based on an identifier of each target device in the plurality of target devices; and transmits a first message to the second device, where the first message carries the group parameter and the identity information of the plurality of target devices. The relevant descriptions of the group information, the group parameter, and the method by which the first device generates the identity information are the same as those in the aforementioned implementations, and details are not repeated.

In some embodiments, the first message may carry the group parameter and the identity information. Accordingly, the processing of the second device after receiving the first message may include: calculating the identity verification values of the plurality of target devices based on an identifier of and one or more parameter values corresponding to each target device in the plurality of target devices contained in the identity information, and authenticating the plurality of target devices based on the identity verification values of the plurality of target devices and the group parameter. The processing of the second device authenticating the plurality of target devices is the same as that in the aforementioned embodiments, and details are not repeated.

Optionally, after receiving the first message, the second device may further include: the second device extracting the group parameter from the first message; and the second device checking on the blockchain whether the group parameter has been revoked. The processing of the second device checking on the blockchain whether the group parameter has been revoked is the same as that in the previous implementations and will not be repeated.

Through the above processing, it may be achieved that the second device, i.e., any IoT device or zero-power device, initiates authentication of a plurality of target devices in the same trust domain as the second device, and then the first device acts as a proxy to generate the identity information and reports the identity information to the second device, then the second device completes the processing of the authentication of the plurality of target devices based on the identity information. Thus, it may improve the efficiency of authenticating a group of target devices for the zero-power device in an intra-domain scenario.

In the implementations, since the first device, the second device and the plurality of target devices all belong to the same trust domain, certificate-related authentication may not be performed between the first device and the second device.

In the implementations, signature-related authentication may also be added between the first device and the second device (any IoT device or zero-power device), and negotiation of a session key may be completed simultaneously.

The first message further carries a first signature for authenticating the first device. The first signature is calculated based on the private key corresponding to the group parameter and the parameters used for calculating the first signature. The parameters used for calculating the first signature include at least one of the following: the identifier of the first device or the security parameter of the first device. In the implementations, the relevant descriptions of the first message, the contents of various possible compositions of the parameters used for calculating the first signature, and the calculation of the first signature by the first device are the same as those in various possible exemplary descriptions provided in the foregoing embodiments, and details are not repeated here.

After the second device receives the first message carrying the first signature for authenticating the first device, the processing of the second device may further include: authenticating the first device based on the group parameter and the first signature. The execution timing and specific processing method of the second device authenticating the first device based on the group parameter and the first signature are the same as those in the aforementioned embodiments, and details are not repeated.

In a case where the second device successfully authenticates the first device, the processing of the second device may further include: transmitting a second message to the first device, where the second message carries a second signature for authenticating the second device, and the second signature is calculated based on the private key of the second device.

The second signature is calculated based on the private key of the second device and a second parameter, where the second parameter includes at least one of the following: the identifier of the second device or the security parameter of the second device. In the embodiment, the relevant descriptions of the private key of the second device, the second message, the second parameter, and the calculation of the second signature by the second device are the same as those in the aforementioned embodiments, and details are not repeated.

The processing of the first device may include: receiving a second message from the second device, where the second message carries a second signature for authenticating the second device; and authenticating the second device based on the public key associated with the second device and the second signature.

Here, the public key associated with the second device includes a public key of the second device, and the public key of the second device is the identifier of the second device. That is, the public key associated with the second device may include the identifier of the second device. Furthermore, a service node to which the second device and the first device belong is the first service node; and the public key associated with the second device further includes the master public key of the first service node, where the master public key of the first service node is pre-configured.

Specifically, the public key associated with the second device refers to a public key used for verifying the second signature. The public key used for verifying the second signature need include the public key of the second device (i.e., the public key of the second device itself), which is specifically the identifier of the second device. Moreover, the public key used for verifying the second signature need further include a master public key of the first service node. In the foregoing embodiments, it has been described that the first device may obtain an address of a third certificate to which the first device belongs by registration, and therefore the first device may directly obtain the master public key of the first service node from the third certificate.

Furthermore, the relevant processing of authenticating the second device based on the public key associated with the second device, the second signature and the second parameter is the same as that in the aforementioned embodiments, and details are not repeated.

In an embodiment, before authenticating the second device based on the public key associated with the second device and the second signature, the processing of the first device may further include: verifying whether the second device has been revoked based on the identifier of the second device carried in the second message. The method by which the first device verifies whether the second device has been revoked is the same as that in the aforementioned embodiments, and details are not repeated.

In the aforementioned authentication process, the first device and the second device may also complete negotiation of the session key. The specific processing is the same as that in the aforementioned embodiments, and details are not repeated.

In some possible implementations, the second device and the plurality of target devices belong to the same trust domain, and the plurality of target devices and the first device belong to the same trust domain. Authentication may also be initiated from the first device (i.e., a proxy device) to the second device (e.g., an IoT device).

In an embodiment, the first message transmitted by the first device may also be used to trigger the processing of authenticating the plurality of target devices. The first message may carry the group parameter and the identity information of a plurality of target devices. The descriptions of the group parameter and the identity information of the plurality of target devices, and the relevant descriptions of the group information stored in the first device are the same as those in the aforementioned embodiments and will not be repeated. The first message may carry the identifiers of the plurality of target devices.

The second device, after receiving the first message, calculates the identity verification values of the plurality of target devices based on an identifier of and one or more parameter values corresponding to each target device in the plurality of target devices contained in the identity information, and authenticates the plurality of target devices based on the identity verification values of the plurality of target devices and the group parameter. The relevant processing of the second device authenticating the plurality of target devices is the same as that in the aforementioned embodiments, and details are not repeated.

In the implementations, since the first device, the second device and the plurality of target devices all belong to the same trust domain, certificate-related authentication may not be performed between the first device and the second device.

In the implementations, signature-related authentication need to be performed between the first device and the second device (any IoT device or zero-power device), and negotiation of the session key may be completed simultaneously.

The difference from the aforementioned implementation lies in that the first device, acting as the authentication initiator, first carries the first signature for authenticating the first device in the first message transmitted by itself.

A method by which the first device calculates the first signature may be that: the first device calculates the first signature using a signature algorithm and based on the private key corresponding to the group parameter and the parameters used for calculating the first signature. The parameters used for calculating the first signature include at least one of the following: the identifier of the first device or the security parameter of the first device. In the implementation, the parameters used for calculating the first signature may include, in addition to at least one of the identifier of the first device or the security parameter of the first device, a second random number generated by the first device. This is since the first device initiates the authentication in the implementation, and the first random number generated by the second device cannot be obtained before the authentication is initiated. Alternatively, in the implementation, the parameters used for calculating the first signature may include, in addition to at least one of the identifier of the first device or the security parameter of the first device, at least one of a second random number generated by the first device or the identifier of the second device. This is since the first device initiates the authentication in the implementation, and the first random number generated by the second device cannot be obtained before the authentication is initiated. However, the first device needs to initiate authentication to the second device, and the identifier of the second device may have been stored locally in advance. Therefore, the parameters used for calculating the first signature may include the identifier of the second device.

Except that the parameters used for calculating the first signature may be different from that in the aforementioned embodiments, the specific method by which the first device calculates the first signature is the same as that in the aforementioned embodiments, and details are not repeated.

After the second device receives the first message carrying the first signature for authenticating the first device, the processing of the second device may further include: authenticating the first device based on the group parameter and the first signature. In the processing of the second device, the difference from the aforementioned embodiments only lies in that the contents of the composition of the parameters used for calculating the first signature have been described in detail in the foregoing embodiments may change. The remaining processing is the same as that in the aforementioned embodiments, and details are not repeated.

In a case where the second device successfully authenticates the first device, the second device may perform the following process: transmitting a second message to the first device, where the second message carries a second signature for authenticating the second device, and the second signature is calculated based on the private key of the second device. Accordingly, the processing of the first device may include: receiving the second message from the second device, where the second message carries the second signature for authenticating the second device; and authenticating the second device based on the public key associated with the second device and the second signature. The difference from the aforementioned implementation lies in that the processing of the second device after receiving the first message further includes transmitting at least one of the following to the first device: the first random number, or the identifier of the second device. Specifically, in a case where the first device initiates authentication via the first message, at least one of the first random number or the identifier of the second device may be transmitted to the first device in the second message along with the second signature.

The specific processing method of calculating the second signature by the second device is the same as that in the aforementioned embodiments, the processing of authenticating the second device by the first device based on the second signature is also the same as that in the aforementioned embodiments, and details are not repeated.

In the implementation, before (or after) authenticating the second device based on the second signature, the first device may also verify whether the second device has been revoked. The specific processing method is the same as that in the previous embodiments, and details are not repeated.

In the implementation, the first device and the second device may further complete the negotiation of the session key during the authentication processing. The specific processing is the same as that in the aforementioned embodiments, and details are not repeated.

In combination with FIG. 7, taking an example where the first device is a proxy device and the second device is an IoT device, the above authentication method is exemplarily illustrated. The scenario depicted in FIG. 7 is as follows: when a regular device (or an IoT device) needs to communicate with the plurality of IoT devices or the plurality of zero-power devices (i.e., the plurality of target devices in the aforementioned embodiments), identity authentication, i.e., a three-way handshake, needs to be performed first. The zero-power device does not have computing power. During the authentication, the proxy device is fully responsible for authentication-related processing. Assuming that an IoT device B, a plurality of zero-power devices (identified as *ID*₁*,ID*₃,*ID*₅) and a proxy device A belong to the same trust domain, and an IoT device B needs to communicate with the plurality of zero-power devices. A processing flow of an authentication method shown in FIG. 7 may include the following steps.

In step 701, an IoT device transmits a first random number (*N_{B}*), an identifier (*ID_{B}*) of the IoT device and identifiers (*ID*₁,*ID*₃,*ID*₅) of a plurality of target devices to be communicated to a proxy device in plaintext.

In this step, information transmitted by the IoT device to the proxy device may be carried by a third message in the aforementioned embodiments. Assuming the IoT device is expressed as B, the proxy device is expressed as A, and the information transmitted by the authentication function entity to the proxy device may be represented as: *B* → *A: ID_{B},ID*₁,*ID*₃,*ID*₅*,N_{B}.*

In step 702, the proxy device transmits, to the IoT device, an identifier (*ID_{A}*) of the proxy device, a federated identity *Root* (i.e., a group parameter), a second random number (*N_{A}*), *a* session key *X_{A} · P* (i.e., a DH parameter of the proxy device) negotiated using a DH protocol, a first signature Sig_{Root}(H(N_{B},N_{A},ID_{B},ID_{A},X_{A}·P)), and a proof message (i.e., identity information) of a plurality of zero-power devices belonging to the federated identity *Root.*

The first signature may be obtained by performing calculation, using a private key corresponding to the federated identity *Root,* on the identifier (*ID_{A}*) of the proxy device, the second random number (*N_{A}*)*,* the session key *X_{A}* · *P* negotiated using the DH protocol, the identifier (*ID_{B}*) of the IoT device and the first random number (*N_{B}*). Here, a purpose of signing the first random number is to enable the IoT device to authenticate that what the IoT device has received is not a replay message but a message transmitted by the proxy device. Signing the identifier *ID_{B}* of the IoT device indicates that the proxy device has received the information transmitted by the authentication function entity in step 701.

In this step, the information transmitted by the proxy device to the IoT device may be carried by a first message in the aforementioned embodiments. In combination with FIG. 4, taking an example of the identifiers of the plurality of zero-power devices in the aforementioned embodiments as *ID*₁,*ID*₃,*ID*₅, the content carried by the first message may be expressed as follows:
*ID*₁,*N*₀,*N*₉,*N*₁₃
*ID₃,N*₂,*N*₈,*N*₁₃
*ID*₅,*N*₄,*N*₁₁,*N₁₂,Root*
*ID_{A},N_{A},X_{A} · P,Sig*(*H*(*N_{B},N_{A},ID_{B},ID_{A},X_{A}* · *P*)).

In step 703, after receiving the information transmitted by the proxy device, the IoT device verifies an identity of each zero-power device, verifies whether the federated identity *Root* has been revoked on the blockchain, and verifies the first signature.

Specifically, the IoT device verifies the identity of each zero-power device. In a case where authentication of each zero-power device is determined to be successful, it is verified on the blockchain whether the federated identity *Root* has been revoked. In a case where the federated identity *Root* is determined to have not been revoked, authenticity of the first signature is verified using *Root.* Furthermore, in a case where the first signature is verified to be passed, that is, the proxy device is successfully authenticated, step 704 may be performed. In addition, the method may further include the IoT device terminating the processing in a case where at least one of the following conditions is met: the federated identity *Root* being determined to be revoked, or the first signature being verified to be failed.

It should also be noted that if the IoT device does not have an on-chain capability, the IoT device may also entrust a proxy device corresponding to the IoT device to verify whether the federated identity *Root* has been revoked on the blockchain.

In step 704, the IoT device transmits the identifier (*ID_{B}*) of the IoT device, the session key *X_{B} · P* negotiated using the DH protocol and a second signature to the proxy device.

The second signature may be obtained by performing calculation, using a private key of the IoT device, on the identifier *ID_{B}* of the IoT device, *X_{B} · P,* the identifier (*ID_{A}*) of the proxy device and the second random number (*N_{A}*). Here, signing with *X_{B} · P* is to enable the IoT device and the proxy device to complete the negotiation of the session key. The purpose of signing the second random number (or referred to as a nonce value *N_{A}*) is to enable the proxy device to authenticate that what the proxy device has received is not a replay message but a message transmitted by the IoT device. Signing *ID_{A}* indicates that the IoT device has received the first message from the proxy device.

In this step, information transmitted by the IoT device to the proxy device may be carried by a second message in the aforementioned embodiments. Assuming the IoT device is expressed as B, the proxy device is expressed as A, and the information transmitted by the IoT device to the proxy device may be represented as: *B* → *A: ID_{B}, X_{B}* · *P, Sig*(*H*(*ID_{B},ID_{A},N_{A},X_{B} · P*))*.*

In step 705, after receiving the information transmitted by the IoT device, the proxy device verifies on the blockchain whether the identity of the IoT device has been revoked. If the identity of the IoT device has not been revoked, the second signature is verified using an identifier of the IoT device as a public key of the IoT device. Here, in the processing of verifying the second signature, the second signature may be verified using a public key of the IoT device and a master public key of a first service node.

In step 706, the proxy device begins communication with the IoT device in a case of completing the authentication of the IoT device.

The example in FIG. 7 is for a scenario where authentication is initiated by the IoT device. For a scenario where authentication is initiated by the proxy device, the specific steps in FIG. 7 may be adaptively replaced or adjusted. For example, step 701 may be deleted (i.e., step 701 is not performed). In step 702, the proxy device transmits, to the IoT device, the identifier (*ID_{A}*) of the proxy device, the federated identity *Root* (i.e., the group parameter), the second random number (*N_{A}*), the session key *X_{A} · P* (i.e., the DH parameter of the proxy device) negotiated using the DH protocol, the identifiers of the plurality of zero-power devices, the first signature Sig_{Root}(H(N_{A},ID_{A},X_{A}·P)), and the proof message (i.e., the identity information) of the plurality of zero-power devices belonging to the federated identity *Root.* Step 703 remains unchanged. In step 704, the IoT device transmits, to the proxy device, the first random number (*N_{B}*), the identifier (I*D_{B}*) of the IoT device, the session key *X_{B} · P* negotiated using the DH protocol and the second signature. Steps 705 to 706 remain unchanged.

By adopting the authentication methods provided in the embodiments, the first device may, acting as a proxy, obtain the identity information related to the plurality of target devices and the group parameter, and then transmit the identity information related to the plurality of target devices and the group parameter to the second device, so that the second device may authenticate the plurality of target devices based on the identity information related to the plurality of target devices and the group parameter. In this way, the plurality of target devices may be authenticated at once, thereby improving authentication efficiency. Moreover, since there is no need to obtain contents stored in the target device during an entire authentication process, storage space of the target device may be saved and storage costs of the target device may be reduced.

The basic principle of the PKI (public key infrastructure) in the aforementioned embodiments is explained as follows: a third-party authoritative institution, namely the Certificate Authority (CA), combines a public key held by the user with the identity information (e.g., name and telephone number) thereof. Before the two are combined, the Certificate Authority (CA) verifies authenticity of the identity of the user, and then signs a certificate that ties a user to a public key thereof.

The identity-based cryptograph (IBC) is another branch of public-key cryptography, and directly uses unique characteristic information (e.g., email address and mobile phone number) of the user as the public key of the user (i.e., the identifier of the user). The user does not need to apply for and exchange certificates, thereby greatly simplifying complexity of certificate management in the cryptographic system. The private key of the user is generated by a trusted key generation center (KGC) in the system using a private key generation algorithm. Here, the private key generation algorithm may be the national cryptographic algorithm SM9, which may specifically include the SM9 digital signature algorithm, the SM9-IBE identifier encryption algorithm and the SM9-KA key negotiation protocol.

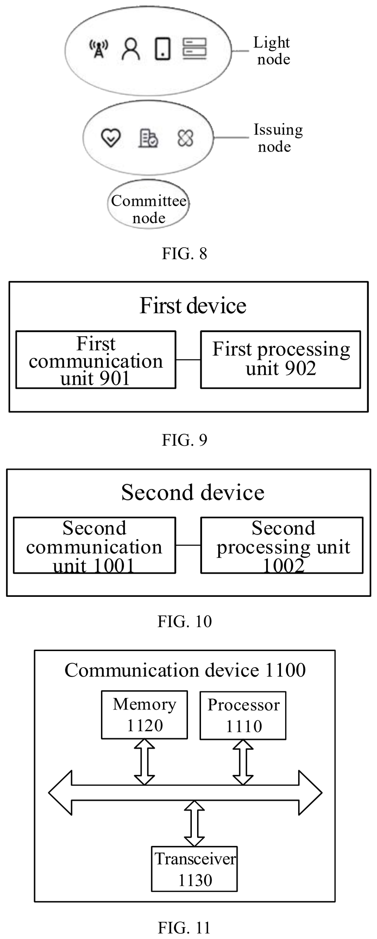

A two-layer identity architecture based on blockchain: an identity management architecture for an integrated sensing and communication scenario and a zero-power scenario is designed as a two-layer architecture. As shown in FIG. 8, the entire protocol framework consists of two parts, where a CA mode (committee joint trust center) is used from a committee node to an issuing node, and a blockchain mode is used from the issuing node to its corresponding IoT device (i.e., a light node). Since the number of the issuing nodes is relatively small, using the CA model is convenient for authorization and management. The data of the IoT devices authorized by the issuing nodes is enormous, and using the blockchain is a rather good solution. Combining the two modes together makes the system more in line with the current mainstream usage in the market and makes the entire system more tightly and clearly hierarchical.

The blockchain mode: the blockchain mode is used from the issuing node to its corresponding IoT device, that is, a certificate of the IoT device is stored on the blockchain. If the certificate is used, the certificate is searched for at the corresponding location on the blockchain. After being issued by the issuing node, the certificate of the IoT device is uploaded to the blockchain. After verification of a plurality of on-chain nodes is passed, the certificate is added to the blockchain through a consensus algorithm. The on-chain nodes first use a public key of the joint committee to verify a certificate of the issuing node. After successful verification, the on-chain nodes use the public key corresponding to the issuing node to verify the certificate of the IoT device. After successful verification, the on-chain nodes put the certificate of the IoT device on the blockchain, and return location information of the certificate to the issuing node. Then, the issuing node returns the location information to the IoT device. In this scenario, the IoT device itself only needs to store the location information of the certificate on the blockchain, without storing the certificate itself. The verifier only needs to search for the certificate at the corresponding location on the blockchain based on the location information transmitted by the transmitter. If the certificate can be found at the corresponding location, authenticity and validity of the certificate may be guaranteed. The verifier does not need to verify the authenticity and validity of the certificate again, which greatly reduces the amount of communication and the amount of computation.

However, in the above processing, a user (i.e., any device) needs to carry its own certificate at all times to prove its own identity. The certificate containing the identity and other public information has a too long content, and is inconvenient to carry. Especially for massive IoT devices, if each device has a certificate, it will put a high burden on the storage server.

The construction idea of the solution provided in the embodiments of the present disclosure may be as follows: in the IBC system, after purchasing equipment and servers from the manufacturer, the business party may build its own KGC. The business party may independently manage IoT devices served in the same trust domain through the KGC. The KGC needs to be registered in the two-layer architecture, and acts as an IoT device in the two-layer architecture (e.g., the two-layer architecture shown in FIG. 8), that is, the KGC needs to submit public materials such as the identity and the public key to the issuing node to obtain the certificate issued by the issuing node. In the Internet of Things (IoT), two types of devices need to be considered: one has the computing power and the other is a zero-power device.

Various possible devices in the solution provided in the embodiments of the present disclosure are defined as follows. The issuing node may be a business party, that is, a vertical industry with a lot of devices and a small and medium-sized factory, such as a logistics company, a manufacturing company and an aquaculture company. Each target device in the plurality of target devices may be any IoT device (or any zero-power device) in the business party, and the plurality of target devices belong to the same KGC (i.e., the same service node). The second device may be an IoT device, that is, any IoT device in the business party and the plurality of target devices may belong to different KGCs or the same KGC. Alternatively, the second device may be an authentication function entity (i.e., a network device), and the authentication function entity may be deployed on operator equipment (e.g., a base station, an AMF, an SEAF, a network data function (NWDF), a policy control function (PCF) or a network exposure function (NEF)) or an authentication server of a third-party security service provider. In this case, the authentication function entity and the plurality of target devices belong to different trust domains. The first device may be a proxy device, and the proxy device is a device in the business party with the computing power and permission to on-chain, and is fully responsible for the identity authentication of the zero-power device. The first device and the plurality of target devices belong to the same trust domain. For example, the type of the proxy device may be any one of user equipment (UE), IAB, relay and repeater.

The national cryptographic algorithm SM9 may implement an identity-based cryptosystem, involving key encapsulation, signature, a session key, a security parameter, public key encryption algorithms, and the like. The key generation algorithm, the signature algorithm and the verification algorithm in the signature schemes are used in the solution provided in the embodiments of the present disclosure.

The solution provided in the embodiments takes into account the limited capabilities of AIoT devices or zero-power devices in the communication network, security management and authentication of these groups of AIoT devices or these groups of zero-power devices may be completed through proxy, thereby achieving the authentication of the groups of zero-power devices while improving the authentication processing efficiency. Moreover, business nodes may be managed using an identity-based cryptographic system. Compared with using a certificate of a terminal, the terminal storage burden may be reduced, the authentication efficiency may be improved, and the problem of identity management for devices in the Internet of Things, as well as the problem of intra-domain and inter-domain authentication during specific use may be solved. Furthermore, in the solution provided in the embodiments, secure credential management for the zero-power IoT devices or AIoT devices may be achieved using the identity-based cryptograph (IBC). An identity of each IoT device is a public key of the IoT device. Specifically, since the identity of each IoT device is the public key of the IoT device, the device does not need to store the public key additionally, and does not need to store a certificate for recording its public key information. For the certificate management server, with the IBC technology adopted, the certificate issuance mechanism may be simplified, only the private key needs to be generated, and there is no need to generate certificates for a large number of IoT devices. Since the identity of each IoT device must be stored, with the identity-based cryptographic system adopted, only the identity of the IoT device itself needs to be stored, and there is no need to store the public key additionally. Using a blockchain architecture, the KGC certificate is stored on the blockchain, and there is no need to store and record the certificate of the public key information, thereby fully utilizing the value of information and reducing storage costs for the zero-power IoT terminals or the AIoT terminals.

FIG. 9 is a schematic diagram of a composition structure of a first device in accordance with an embodiment of the present disclosure. The first device includes:
a first processing unit 902 configured to obtain identity information of a plurality of target devices; and
a first communication unit 901 configured to transmit a first message to a second device, where the first message carries the identity information for authenticating the plurality of target devices.

The first message further carries a group parameter, and the group parameter is calculated based on the identifiers of the plurality of target devices.

The identity information includes the identifier of each target device in the plurality of target devices and one or more parameter values corresponding to each target device.

The first message further carries a first signature for authenticating the first device, and the first signature is calculated based on a private key corresponding to a group parameter.

The first message further carries at least one of following: an identifier of the first device or a security parameter of the first device.

The first signature is calculated based on the private key corresponding to the group parameter and at least one of following parameters: an identifier of the first device, a security parameter of the first device, an identifier of the second device, a first random number or a second random number.

The first communication unit is configured to receive a second message from the second device, and the second message carries a second signature for authenticating the second device.

The first processing unit is configured to authenticate the second device based on a public key associated with the second device and the second signature.

The second message further carries at least one of following: an identifier of the second device or a security parameter of the second device.

The first processing unit is configured to authenticate the second device based on the public key associated with the second device, the second signature and at least one of following parameters: the identifier of the second device, the security parameter of the second device, an identifier of the first device, a first random number or a second random number.

The first communication unit is configured to receive the first random number from the second device.

The first message further carries the second random number.

The first processing unit is configured to calculate a session key based on the security parameter of the second device and a security parameter of the first device, and the session key is used for communication between the first device and the second device.

The public key associated with the second device includes an identifier of the second device.

A service node to which the second device and the first device belong is a first service node. The public key associated with the second device further includes a master public key of the first service node, and the master public key of the first service node is pre-configured.

The first communication unit is configured to receive an address of a first certificate from the second device, where the first certificate is a certificate of a second service node to which the second device belongs.

The first processing unit is configured to authenticate an identity of the second service node based on the address of the first certificate.

The public key associated with the second device further includes a master public key of the second service node, and the master public key of the second service node is stored in the first certificate.

A type of the second device is one of following: a terminal, an Internet of Things device and a zero-power device.

The first communication unit is configured to receive an address of a second certificate from the second device, where the second certificate is a certificate of the second device.

The first processing unit is configured to authenticate an identity of the second device based on the address of the second certificate.

The public key associated with the second device includes a public key of the second device stored in the second certificate.

The second device is an authentication function entity, and the authentication function entity is deployed in at least one of following: an application function (AF), an access and mobility management function (AMF), a session management function (SMF), an authentication server function (AUSF), a unified data management function (UDM), a unified data repository (UDR), a home subscriber system (HSS), an authentication credential repository and processing function (ARPF), a bootstrapping server function (BSF), a security anchor function (SEAF), a core network dedicated network element, an access network device or a network edge node.

The first message further carries an address of a third certificate, the third certificate is a certificate of a first service node to which the first device belongs, and the third certificate is used for authenticating an identity of the first service node.

The first communication unit is configured to receive a third message from the second device, where the third message carries identifiers of the plurality of target devices.

The first message further carries identifiers of the plurality of target devices.

A type of the first device includes one of following: a terminal and an access network device.

A type of each target device in the plurality of target devices is one of following: a zero-power device and an Internet of Things device.

FIG. 10 is a schematic diagram of a composition structure of a second device in accordance with an embodiment of the present disclosure. The second device includes:
a second communication unit 1001 configured to receive a first message from a first device, where the first message carries identity information for authenticating a plurality of target devices.

The first message further carries a group parameter, and the group parameter is calculated based on identifiers of the plurality of target devices.

The identity information includes an identifier of each target device in the plurality of target devices and one or more parameter values corresponding to each target device.

As shown in FIG. 10, the second device further includes:
a second processing unit 1002 configured to calculate an identity verification value of the plurality of target devices based on both the identifier of each target device and the one or more parameter values corresponding to each target device in the identity information, and authenticate the plurality of target devices based on the identity verification value of the plurality of target devices and the group parameter.

The first message further carries a first signature for authenticating the first device.

The second device further includes a second processing unit configured to authenticate the first device based on the group parameter and the first signature.

The first message further carries at least one of following: an identifier of the first device or a security parameter of the first device.

The second processing unit is configured to authenticate the first device based on the group parameter, the first signature and at least one of following parameters: the identifier of the first device, the security parameter of the first device, an identifier of the second device, a first random number or a second random number.

The second communication unit is configured to transmit a second message to the first device, the second message carries a second signature for authenticating the second device, and the second signature is calculated based on a private key of the second device.

The second message further carries at least one of following: an identifier of the second device or a security parameter of the second device.

The second signature is calculated based on the private key of the second device and at least one of following parameters: the identifier of the second device, the security parameter of the second device, an identifier of the first device, a first random number or a second random number.

The second communication unit is configured to transmit the first random number to the first device.

The first message further carries the second random number.

The second processing unit is configured to calculate a session key based on a security parameter of the second device and the security parameter of the first device, and the session key is used for communication between the first device and the second device.

The second communication unit is configured to transmit an address of a first certificate to the first device, where the first certificate is a certificate of a second service node to which the second device belongs.

A type of the second device is one of following: a terminal, an Internet of Things device and a zero-power device.

The second communication unit is configured to transmit an address of a second certificate to the first device, where the second certificate is a certificate of the second device.

The second device is an authentication function entity, and the authentication function entity is deployed in at least one of following: an application function (AF), an access and mobility management function (AMF), a session management function (SMF), an authentication server function (AUSF), a unified data management function (UDM), a unified data repository (UDR), a home subscriber system (HSS), an authentication credential repository and processing function (ARPF), a bootstrapping server function (BSF), a security anchor function (SEAF), a core network dedicated network element, an access network device or a network edge node.

The first message further carries an address of a third certificate, and the third certificate is a certificate of a first service node to which the first device belongs.

A second processing unit is configured to authenticate an identity of the first service node based on the address of the third certificate.

The second communication unit is configured to transmit a third message to the first device, where the third message carries identifiers of the plurality of target devices.

The first message further carries identifiers of the plurality of target devices.

A type of the first device includes one of following: a terminal and an access network device.

The device in the embodiments of the present disclosure may achieve the corresponding function of each device in the aforementioned authentication method embodiments. As for the process, function, implementation and beneficial effect corresponding to each module (sub-module, unit or component) in the device, reference may be made to the corresponding descriptions in the above method embodiments, and details are not repeated here. It should be noted that the functions described in various modules (sub-modules, units or components) of the device in the embodiments of the present disclosure may be implemented by different modules (sub-modules, units or components) or by the same module (sub-module, unit or component).

FIG. 11 is a schematic structural diagram of a communication device 1100 in accordance with the embodiments of the present disclosure. The communication device 1100 includes a processor 1110, and the processor 1110 may call a computer program from a memory and run the computer program to enable the communication device 1100 to implement the methods in the embodiments of the present disclosure.

In a possible implementation, the communication device 1100 may further include a memory 1120. The processor 1110 may call a computer program from the memory 1120 and run the computer program to enable the communication device 1100 to implement the methods in the embodiments of the present disclosure. The memory 1120 may be a separate device independent of the processor 1110, or may be integrated into the processor 1110.

In a possible implementation, the communication device 1100 may further include a transceiver 1130. The processor 1110 may control the transceiver 1130 to communicate with other devices, specifically, transmit information or data to other devices or receive information or data transmitted by other devices. The transceiver 1130 may include a transmitter and a receiver. The transceiver 1130 may further include antenna(s), and there may be one or more antennas.

The embodiments of the present disclosure provide a first device, which includes: a processor and a memory for communicating with the processor. The memory is used to store instructions. When executed by the processor, the instructions enable the first device to perform: obtaining identity information of a plurality of target devices; and transmitting a first message to a second device, where the first message carries the identity information for authenticating the plurality of target devices.

The first message further carries a group parameter, and the group parameter is calculated based on the identifiers of the plurality of target devices.

The identity information includes the identifier of each target device in the plurality of target devices and one or more parameter values corresponding to each target device.

The first message further carries a first signature for authenticating the first device, and the first signature is calculated based on a private key corresponding to a group parameter.

The first message further carries at least one of following: an identifier of the first device or a security parameter of the first device.

The first signature is calculated based on the private key corresponding to the group parameter and at least one of following parameters: an identifier of the first device, a security parameter of the first device, an identifier of the second device, a first random number or a second random number.

The instructions further enable the first device to perform: receiving a second message from the second device, where the second message carries a second signature for authenticating the second device; and authenticating the second device based on a public key associated with the second device and the second signature.

The second message further carries at least one of following: an identifier of the second device or a security parameter of the second device.

The instructions further enable the first device to perform: authenticating the second device based on the public key associated with the second device, the second signature and at least one of the identifier of the second device, the security parameter of the second device, an identifier of the first device, a first random number or a second random number.

The instructions further enable the first device to perform: receiving the first random number from the second device.

The first message also carries the second random number.

The instructions further enable the first device to perform: calculating a session key based on the security parameter of the second device and a security parameter of the first device, where the session key is used for communication between the first device and the second device.

The public key associated with the second device includes an identifier of the second device.

A service node to which the second device and the first device belong is a first service node. The public key associated with the second device further includes a master public key of the first service node, and the master public key of the first service node is pre-configured.

The instructions further enable the first device to perform: receiving an address of a first certificate from the second device, where the first certificate is a certificate of a second service node to which the second device belongs.

The instructions further enable the first device to perform: authenticating an identity of the second service node based on the address of the first certificate.

The public key associated with the second device further includes a master public key of the second service node, and the master public key of the second service node is stored in the first certificate.

A type of the second device is one of following: a terminal, an Internet of Things device and a zero-power device.

The instructions further enable the first device to perform: receiving an address of a second certificate from the second device, where the second certificate is a certificate of the second device.

The instructions further enable the first device to perform: authenticating an identity of the second device based on the address of the second certificate.

The public key associated with the second device includes a public key of the second device stored in the second certificate.

The second device is an authentication function entity, and the authentication function entity is deployed in at least one of following: an application function (AF), an access and mobility management function (AMF), a session management function (SMF), an authentication server function (AUSF), a unified data management function (UDM), a unified data repository (UDR), a home subscriber system (HSS), an authentication credential repository and processing function (ARPF), a bootstrapping server function (BSF), a security anchor function (SEAF), a core network dedicated network element, an access network device or a network edge node.

The first message further carries an address of a third certificate, the third certificate is a certificate of a first service node to which the first device belongs, and the third certificate is used for authenticating an identity of the first service node.

The instructions further enable the first device to perform: receiving a third message from the second device, where the third message carries identifiers of the plurality of target devices.

The first message further carries identifiers of the plurality of target devices.

A type of the first device includes one of following: a terminal and an access network device.

A type of each target device in the plurality of target devices is one of following: a zero-power device and an Internet of Things device.

The embodiments of the present disclosure provide a second device, which includes: a processor and a memory for communicating with the processor. The memory is used to store instructions. When executed by the processor, the instructions enable the second device to perform: receiving a first message from a first device, where the first message carries identity information for authenticating a plurality of target device.

The first message further carries a group parameter, and the group parameter is calculated based on identifiers of the plurality of target devices.

The identity information includes an identifier of each target device in the plurality of target devices and one or more parameter values corresponding to each target device.

The instructions further enable the second device to perform: calculating an identity verification value of the plurality of target devices based on both the identifier of each target device and the one or more parameter values corresponding to each target device in the identity information, and authenticating the plurality of target devices based on the identity verification value of the plurality of target devices and the group parameter.

The first message further carries a first signature for authenticating the first device.

The instructions enable the second device to perform: authenticating the first device based on the group parameter and the first signature.

The first message further carries at least one of following: an identifier of the first device or a security parameter of the first device.

The instructions further enable the second device to perform: authenticating the first device based on the group parameter, the first signature and at least one of the identifier of the first device, the security parameter of the first device, an identifier of the second device, a first random number or a second random number.

The instructions further enable the second device to perform: transmitting a second message to the first device, where the second message carries a second signature for authenticating the second device, and the second signature is calculated based on a private key of the second device.

The second message further carries at least one of following: an identifier of the second device or a security parameter of the second device.

The second signature is calculated based on the private key of the second device and at least one of following parameters: the identifier of the second device, the security parameter of the second device, an identifier of the first device, a first random number or a second random number.

The instructions further enable the second device to perform: transmitting the first random number to the first device.

The first message further carries the second random number.

The instructions further enable the second device to perform: calculating a session key based on a security parameter of the second device and the security parameter of the first device, where the session key is used for communication between the first device and the second device.

The instructions further enable the second device to perform: transmitting an address of a first certificate to the first device, where the first certificate is a certificate of a second service node to which the second device belongs.

A type of the second device is one of following: a terminal, an Internet of Things device and a zero-power device.

The instructions further enable the second device to perform: transmitting an address of a second certificate to the first device, where the second certificate is a certificate of the second device.

The second device is an authentication function entity, and the authentication function entity is deployed in at least one of following: an application function (AF), an access and mobility management function (AMF), a session management function (SMF), an authentication server function (AUSF), a unified data management function (UDM), a unified data repository (UDR), a home subscriber system (HSS), an authentication credential repository and processing function (ARPF), a bootstrapping server function (BSF), a security anchor function (SEAF), a core network dedicated network element, an access network device or a network edge node.

The first message further carries an address of a third certificate, and the third certificate is a certificate of a first service node to which the first device belongs.

The instructions further enable the second device to perform: authenticating an identity of the first service node based on the address of the third certificate.

The instructions further enable the second device to perform: transmitting a third message to the first device, where the third message carries identifiers of the plurality of target devices.

The first message further carries identifiers of the plurality of target devices.

A type of the first device includes one of following: a terminal and an access network device.

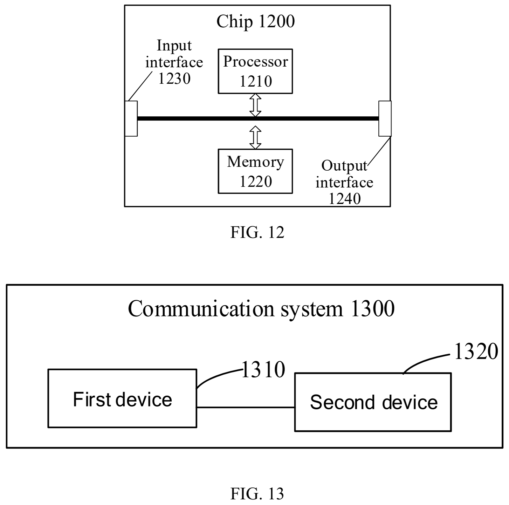

FIG. 12 is a schematic structural diagram of a chip 1200 in accordance with the embodiments of the present disclosure. The chip 1200 includes a processor 1210, and the processor 1210 may call a computer program from a memory and run the computer program to implement the methods in the embodiments of the present disclosure. In a possible implementation, the chip 1200 may further include a memory 1220. The processor 1210 may call a computer program from the memory 1220 and run the computer program to implement the methods performed by an access network device or a core network side device in the embodiments of the present disclosure. The memory 1220 may be a separate device independent of the processor 1210, or may be integrated into the processor 1210. In a possible implementation, the chip 1200 may further include an input interface 1230. The processor 1210 may control the input interface 1230 to communicate with other devices or chips, specifically, obtain information or data transmitted by other devices or chips. In a possible implementation, the chip 1200 may further include an output interface 1240. The processor 1210 may control the output interface 1240 to communicate with other devices or chips, specifically, output information or data to other devices or chips. In a possible implementation, the chip may be applied to each device in the embodiments of the present disclosure, and the chip may implement the corresponding process implemented by each device in various methods in the embodiments of the present disclosure. For sake of brevity, details are not repeated here. It should be understood that the chip mentioned in the embodiments of the present disclosure may also be referred to as a system-level chip, a system chip, a chip system or a system-on-chip, or the like.

The processor mentioned above may be a general purpose processor, a digital signal processor, an application specific integrated circuit, a field programmable gate array or other programmable logic devices, a transistor logic device, or a discrete hardware component. The general purpose processor mentioned above may be a microprocessor or any conventional processor. The memory mentioned above may be a volatile memory or a non-volatile memory, or include both the volatile and non-volatile memories. The non-volatile memory may be a read-only memory, a programmable read-only memory, an erasable programmable read-only memory, an electrically erasable programmable read-only memory, or a flash memory. The volatile memory may be a random access memory.

It should be understood that the above memory is an exemplary but not a limiting description. For example, the memory in the embodiments of the present disclosure may also be a static random access memory or a dynamic random access memory. In other words, the memory in the embodiments of the present disclosure is intended to include, but is not limited to, these and any other suitable types of memories.

FIG. 13 is a schematic block diagram of a communication system 1300 in accordance with the embodiments of the present disclosure. The communication system 1300 includes a first device 1310 and a second device 1320. The above embodiments may be implemented entirely or partially by software, hardware, firmware, or any combination thereof. When implemented using software, the embodiments may be implemented entirely or partially in a form of a computer program product. The computer program product includes one or more computer instructions. When the computer program instructions are loaded and executed on a computer, processes or functions in the embodiments of the present disclosure are generated entirely or partially. The computer may be a general-purpose computer, a special-purpose computer, a computer network, or other programmable devices. The computer instructions may be stored in a computer-readable storage medium, or transmitted from a computer-readable storage medium to another computer-readable storage medium. For example, the computer instructions may be transmitted from a website, computer, server or data center to another website, computer, server or data center via a wired manner (e.g., coaxial cable, optical fiber, or digital subscriber line (DSL)) or a wireless manner (e.g., infrared, radio or microwave). The computer-readable storage medium may be any available medium accessible by the computer, or may be a data storage device, such as a server or a data center, integrated by one or more available media. The available medium may be a magnetic medium (e.g., a hard disk), or a semiconductor medium (e.g., a solid state drive (SSD)), or the like.

It should be understood that in the various embodiments of the present disclosure, the magnitude of the serial number of each of the above-mentioned processes does not mean the order of execution. The order of execution of each process shall be determined by its function and internal logic, and shall not constitute any limitation on the implementation process of the embodiments of the present disclosure.

Those skilled in the art can clearly understand that for the convenience and simplicity of description, the working processes of the systems, devices and units described above may refer to the corresponding processes in the above method embodiments, and details will not be repeated here.

The foregoing descriptions are merely specific implementations of the present disclosure, but the protection scope of the present disclosure is not limited thereto. Changes or replacements that any person skilled in the art could readily conceive of within the technical scope of the present disclosure shall be included in the protection scope of the present disclosure. Therefore, the protection scope of the present disclosure shall be subject to the protection scope of the claims.

## Claims

1. An authentication method performed by a first device, comprising:
obtaining identity information of a plurality of target devices; and
transmitting a first message to a second device, wherein the first message carries the identity information for authenticating the plurality of target devices.

2. The method according to claim 1, wherein the first message further carries a group parameter, and the group parameter is calculated based on identifiers of the plurality of target devices.

3. The method according to claim 1, wherein the identity information comprises an identifier of each target device in the plurality of target devices and one or more parameter values corresponding to each target device.

4. The method according to any one of claims 1 to 3, wherein the first message further carries a first signature for authenticating the first device, and the first signature is calculated based on a private key corresponding to a group parameter.

5. The method according to claim 4, wherein the first message further carries at least one of following: an identifier of the first device and a security parameter of the first device.

6. The method according to claim 4 or 5, wherein the first signature is calculated based on the private key corresponding to the group parameter and at least one of following parameters: an identifier of the first device, a security parameter of the first device, an identifier of the second device, a first random number or a second random number.

7. The method according to any one of claims 1 to 6, further comprising:
receiving a second message from the second device, wherein the second message carries a second signature for authenticating the second device; and
authenticating the second device based on a public key associated with the second device and the second signature.

8. The method according to claim 7, wherein the second message further carries at least one of following: an identifier of the second device or a security parameter of the second device.

9. The method according to claim 8, wherein authenticating the second device based on the public key associated with the second device and the second signature comprises:
authenticating the second device based on the public key associated with the second device, the second signature and at least one of following parameters: the identifier of the second device, the security parameter of the second device, an identifier of the first device, a first random number or a second random number.

10. The method according to claim 6 or 9, further comprising:
receiving the first random number from the second device.

11. The method according to any one of claims 6, 9 and 10, wherein the first message further carries the second random number.

12. The method according to any one of claims 8 to 11, further comprising:
calculating a session key based on the security parameter of the second device and a security parameter of the first device, wherein the session key is used for communication between the first device and the second device.

13. The method according to any one of claims 7 to 9, wherein the public key associated with the second device comprises an identifier of the second device.

14. The method according to claim 13, wherein a service node to which the second device and the first device belong is a first service node; the public key associated with the second device further comprises a master public key of the first service node, and the master public key of the first service node is pre-configured.

15. The method according to claim 13, further comprising:
receiving an address of a first certificate from the second device, wherein the first certificate is a certificate of a second service node to which the second device belongs.

16. The method according to claim 15, further comprising:
authenticating an identity of the second service node based on the address of the first certificate.

17. The method according to claim 15 or 16, wherein the public key associated with the second device further comprises a master public key of the second service node, and the master public key of the second service node is stored in the first certificate.

18. The method according to any one of claims 1 to 17, wherein a type of the second device is one of following: a terminal, an Internet of Things device and a zero-power device.

19. The method according to any one of claims 7 to 9, further comprising:
receiving an address of a second certificate from the second device, wherein the second certificate is a certificate of the second device.

20. The method according to claim 19, further comprising:
authenticating an identity of the second device based on the address of the second certificate.

21. The method according to claim 19 or 20, wherein the public key associated with the second device comprises a public key of the second device stored in the second certificate.

22. The method according to any one of claims 1 to 12 and 19 to 21, wherein the second device is an authentication function entity, and the authentication function entity is deployed in at least one of following: an application function (AF), an access and mobility management function (AMF), a session management function (SMF), an authentication server function (AUSF), a unified data management function (UDM), a unified data repository (UDR), a home subscriber system (HSS), an authentication credential repository and processing function (ARPF), a bootstrapping server function (BSF), a security anchor function (SEAF), a core network dedicated network element, an access network device or a network edge node.

23. The method according to any one of claims 1 to 22, wherein the first message further carries an address of a third certificate, the third certificate is a certificate of a first service node to which the first device belongs, and the third certificate is used for authenticating an identity of the first service node.

24. The method according to any one of claims 1 to 23, further comprising:
receiving a third message from the second device, wherein the third message carries identifiers of the plurality of target devices.

25. The method according to any one of claims 1 to 23, wherein the first message further carries identifiers of the plurality of target devices.

26. The method according to any one of claims 1 to 25, wherein a type of the first device comprises one of following: a terminal and an access network device.

27. The method according to any one of claims 1 to 26, wherein a type of each target device in the plurality of target devices is one of following: a zero-power device and an Internet of Things device.

28. An authentication method performed by a second device, comprising:
receiving a first message from a first device, wherein the first message carries identity information for authenticating a plurality of target devices.

29. The method according to claim 28, wherein the first message further carries a group parameter, and the group parameter is calculated based on identifiers of the plurality of target devices.

30. The method according to claim 29, wherein the identity information comprises an identifier of each target device in the plurality of target devices and one or more parameter values corresponding to each target device.

31. The method according to claim 30, further comprising:
calculating an identity verification value of the plurality of target devices based on both the identifier of each target device and the one or more parameter values corresponding to each target device in the identity information; and
authenticating the plurality of target devices based on the identity verification value of the plurality of target devices and the group parameter.

32. The method according to any one of claims 29 to 31, wherein the first message further carries a first signature for authenticating the first device.

33. The method according to claim 32, further comprising:
authenticating the first device based on the group parameter and the first signature.

34. The method according to claim 33, wherein the first message further carries at least one of following: an identifier of the first device or a security parameter of the first device.

35. The method according to claim 34, wherein authenticating the first device based on the group parameter or the first signature comprises:
authenticating the first device based on the group parameter, the first signature and at least one of following parameters: the identifier of the first device, the security parameter of the first device, an identifier of the second device, a first random number or a second random number.

36. The method according to any one of claims 28 to 35, further comprising:
transmitting a second message to the first device, wherein the second message carries a second signature for authenticating the second device, and the second signature is calculated based on a private key of the second device.

37. The method according to claim 36, wherein the second message further carries at least one of following: an identifier of the second device or a security parameter of the second device.

38. The method according to claim 37, wherein the second signature is calculated based on the private key of the second device and at least one of following parameters: the identifier of the second device, the security parameter of the second device, an identifier of the first device, a first random number or a second random number.

39. The method according to claim 35 or 38, further comprising:
transmitting the first random number to the first device.

40. The method according to any one of claims 35, 38 and 39, wherein the first message further carries the second random number.

41. The method according to any one of claims 34, 35 and 37 to 40, further comprising:
calculating a session key based on a security parameter of the second device and the security parameter of the first device, wherein the session key is used for communication between the first device and the second device.

42. The method according to any one of claims 28 to 41, further comprising:
transmitting an address of a first certificate to the first device, wherein the first certificate is a certificate of a second service node to which the second device belongs.

43. The method according to any one of claims 28 to 42, wherein a type of the second device is one of following: a terminal, an Internet of Things device and a zero-power device.

44. The method according to any one of claims 28 to 41, further comprising:
transmitting an address of a second certificate to the first device, wherein the second certificate is a certificate of the second device.

45. The method according to any one of claims 28 to 41 and 44, wherein the second device is an authentication function entity, and the authentication function entity is deployed in at least one of following: an application function (AF), an access and mobility management function (AMF), a session management function (SMF), an authentication server function (AUSF), a unified data management function (UDM), a unified data repository (UDR), a home subscriber system (HSS), an authentication credential repository and processing function (ARPF), a bootstrapping server function (BSF), a security anchor function (SEAF), a core network dedicated network element, an access network device or a network edge node.

46. The method according to any one of claims 28 to 45, wherein the first message further carries an address of a third certificate, and the third certificate is a certificate of a first service node to which the first device belongs.

47. The method according to claim 46, further comprising:
authenticating an identity of the first service node based on the address of the third certificate.

48. The method according to any one of claims 28 to 47, further comprising:
transmitting a third message to the first device, wherein the third message carries identifiers of the plurality of target devices.

49. The method according to any one of claims 28 to 47, wherein the first message further carries identifiers of the plurality of target devices.

50. The method according to any one of claims 28 to 49, wherein a type of the first device comprises one of following: a terminal and an access network device.

51. A first device, comprising:
a first processing unit configured to obtain identity information of a plurality of target devices; and
a first communication unit configured to transmit a first message to a second device, wherein the first message carries the identity information for authenticating the plurality of target devices.

52. The first device according to claim 51, wherein the first message further carries a group parameter, and the group parameter is calculated based on identifiers of the plurality of target device.

53. The first device according to claim 51, wherein the identity information comprises an identifier of each target device in the plurality of target devices and one or more parameter values corresponding to each target device.

54. The first device according to any one of claims 51 to 53, wherein the first message further carries a first signature for authenticating the first device, and the first signature is calculated based on a private key corresponding to a group parameter.

55. The first device according to claim 54, wherein the first message further carries at least one of following: an identifier of the first device or a security parameter of the first device.

56. The first device according to claim 54 or 55, wherein the first signature is calculated based on the private key corresponding to the group parameter and at least one of following parameters: an identifier of the first device, a security parameter of the first device, an identifier of the second device, a first random number or a second random number.

57. The first device according to any one of claims 51 to 56, wherein
the first communication unit is configured to receive a second message from the second device, the second message carries a second signature for authenticating the second device; and
the first processing unit is configured to authenticate the second device based on a public key associated with the second device and the second signature.

58. The first device according to claim 57, wherein the second message further carries at least one of following: an identifier of the second device or a security parameter of the second device.

59. The first device according to claim 58, wherein the first processing unit is configured to authenticate the second device based on the public key associated with the second device, the second signature and at least one of following parameters: the identifier of the second device, the security parameter of the second device, an identifier of the first device, a first random number or a second random number.

60. The first device according to claim 56 or 59, wherein the first communication unit is configured to receive the first random number from the second device.

61. The first device according to any one of claims 56, 59 and 60, wherein the first message further carries the second random number.

62. The first device according to any one of claims 58 to 61, wherein the first processing unit is configured to calculate a session key based on the security parameter of the second device and a security parameter of the first device, and the session key is used for communication between the first device and the second device.

63. The first device according to any one of claims 57 to 59, wherein the public key associated with the second device comprises an identifier of the second device.

64. The first device according to claim 63, wherein a service node to which the second device and the first device belong is a first service node; the public key associated with the second device further comprises a master public key of the first service node, and the master public key of the first service node is pre-configured.

65. The first device according to claim 63, wherein the first communication unit is configured to receive an address of a first certificate from the second device, wherein the first certificate is a certificate of a second service node to which the second device belongs.

66. The first device according to claim 65, wherein the first processing unit is configured to authenticate an identity of the second service node based on the address of the first certificate.

67. The first device according to claim 65 or 66, wherein the public key associated with the second device further comprises a master public key of the second service node, and the master public key of the second service node is stored in the first certificate.

68. The first device according to any one of claims 51 to 67, wherein a type of the second device is one of following: a terminal, an Internet of Things device and a zero-power device.

69. The first device according to any one of claims 57 to 59, wherein the first communication unit is configured to receive an address of a second certificate from the second device, wherein the second certificate is a certificate of the second device.

70. The first device according to claim 69, wherein the first processing unit is configured to authenticate an identity of the second device based on the address of the second certificate.

71. The first device according to claim 69 or 70, wherein the public key associated with the second device comprises a public key of the second device stored in the second certificate.

72. The first device according to any one of claims 51 to 62 and 69 to 71, wherein the second device is an authentication function entity, and the authentication function entity is deployed in at least one of following: an application function (AF), an access and mobility management function (AMF), a session management function (SMF), an authentication server function (AUSF), a unified data management function (UDM), a unified data repository (UDR), a home subscriber system (HSS), an authentication credential repository and processing function (ARPF), a bootstrapping server function (BSF), a security anchor function (SEAF), a core network dedicated network element, an access network device or a network edge node.

73. The first device according to any one of claims 51 to 72, wherein the first message further carries an address of a third certificate, the third certificate is a certificate of a first service node to which the first device belongs, and the third certificate is used for authenticating an identity of the first service node.

74. The first device according to any one of claims 51 to 73, wherein the first communication unit is configured to receive a third message from the second device, wherein the third message carries identifiers of the plurality of target devices.

75. The first device according to any one of claims 51 to 73, wherein the first message further carries identifiers of the plurality of target devices.

76. The first device according to any one of claims 51 to 75, wherein a type of the first device comprises one of following: a terminal and an access network device.

77. The first device according to any one of claims 51 to 76, wherein a type of each target device in the plurality of target devices is one of following: a zero-power device and an Internet of Things device.

78. A second device, comprising:
a second communication unit configured to receive a first message from a first device, wherein the first message carries identity information for authenticating a plurality of target devices.

79. The second device according to claim 78, wherein the first message further carries a group parameter, and the group parameter is calculated based on identifiers of the plurality of target devices.

80. The second device according to claim 79, wherein the identity information comprises an identifier of each target device in the plurality of target devices and one or more parameter values corresponding to each target device.

81. The second device according to claim 80, further comprising: a second processing unit configured to calculate an identity verification value of the plurality of target devices based on both the identifier of each target device and the one or more parameter values corresponding to each target device in the identity information, and authenticate the plurality of target devices based on the identity verification value of the plurality of target devices and the group parameter.

82. The second device according to any one of claims 79 to 81, wherein the first message further carries a first signature for authenticating the first device.

83. The second device according to claim 82, further comprising: a second processing unit configured to authenticate the first device based on the group parameter and the first signature.

84. The second device according to claim 83, wherein the first message further carries at least one of following: an identifier of the first device or a security parameter of the first device.

85. The second device according to claim 84, wherein the second processing unit is configured to authenticate the first device based on the group parameter, the first signature and at least one of following parameters: the identifier of the first device, the security parameter of the first device, an identifier of the second device, a first random number or a second random number.

86. The second device according to any one of claims 78 to 85, wherein the second communication unit is configured to transmit a second message to the first device, the second message carries a second signature for authenticating the second device, and the second signature is calculated based on a private key of the second device.

87. The second device according to claim 86, wherein the second message further carries at least one of following: an identifier of the second device or a security parameter of the second device.

88. The second device according to claim 87, wherein the second signature is calculated based on the private key of the second device and at least one of following parameters: the identifier of the second device, the security parameter of the second device, an identifier of the first device, a first random number or a second random number.

89. The second device according to claim 85 or 88, wherein the second communication unit is configured to transmit the first random number to the first device.

90. The second device according to any one of claims 85, 88 and 89, wherein the first message further carries the second random number.

91. The second device according to any one of claims 84, 85 and 87 to 90, wherein the second processing unit is configured to calculate a session key based on a security parameter of the second device and the security parameter of the first device, and the session key is used for communication between the first device and the second device.

92. The second device according to any one of claims 78 to 91, wherein the second communication unit is configured to transmit an address of a first certificate to the first device, wherein the first certificate is a certificate of a second service node to which the second device belongs.

93. The second device according to any one of claims 78 to 92, wherein a type of the second device is one of following: a terminal, an Internet of Things device and a zero-power device.

94. The second device according to any one of claims 78 to 91, wherein the second communication unit is configured to transmit an address of a second certificate to the first device, wherein the second certificate is a certificate of the second device.

95. The second device according to any one of claims 78 to 91 and 94, wherein the second device is an authentication function entity, and the authentication function entity is deployed in at least one of following: an application function (AF), an access and mobility management function (AMF), a session management function (SMF), an authentication server function (AUSF), a unified data management function (UDM), a unified data repository (UDR), a home subscriber system (HSS), an authentication credential repository and processing function (ARPF), a bootstrapping server function (BSF), a security anchor function (SEAF), a core network dedicated network element, an access network device or a network edge node.

96. The second device according to any one of claims 78 to 95, wherein the first message further carries an address of a third certificate, and the third certificate is a certificate of a first service node to which the first device belongs.

97. The second device according to claim 96, wherein a second processing unit is configured to authenticate an identity of the first service node based on the address of the third certificate.

98. The second device according to any one of claims 78 to 97, wherein the second communication unit is configured to transmit a third message to the first device, wherein the third message carries identifiers of the plurality of target devices.

99. The second device according to any one of claims 78 to 97, wherein the first message further carries identifiers of the plurality of target devices.

100. The second device according to any one of claims 78 to 99, wherein a type of the first device comprises one of following: a terminal and an access network device.

101. A first device, comprising: a transceiver, a processor and a memory; wherein the memory is configured to store a computer program, and the processor is configured to call the computer program stored in the memory and run the computer program to enable the first device to perform the method according to any one of claims 1 to 27.

102. A second device, comprising: a transceiver, a processor and a memory; wherein the memory is configured to store a computer program, and the processor is configured to call the computer program stored in the memory and run the computer program to enable the second device to perform the method according to any one of claims 28 to 50.

103. A chip, comprising: a processor configured to call a computer program from a memory and run the computer program to enable a device equipped with the chip to perform the method according to any one of claims 1 to 27, or the method according to any one of claims 28 to 50.

104. A computer-readable storage medium for storing a computer program, wherein the computer program, when run on a device, enables the device to perform the method according to any one of claims 1 to 27, or the method according to any one of claims 28 to 50.

105. A computer program product comprising computer program instructions, wherein the computer program instructions enable a computer to perform the method according to any one of claims 1 to 27, or the method according to any one of claims 28 to 50.

106. A computer program enabling a computer to perform the method according to any one of claims 1 to 27, or the method according to any one of claims 28 to 50.
